(19) Europäisches Patentamt
European Patent Office
Office européen des brevets

(11) **EP 2 375 551 B1**

(12) **EUROPÄISCHE PATENTSCHRIFT**

(45) Veröffentlichungstag und Bekanntmachung des Hinweises auf die Patenterteilung:
**04.03.2015 Patentblatt 2015/10**

(51) Int Cl.:
***H02M 1/08*** *(2006.01)*

(21) Anmeldenummer: **11161339.4**

(22) Anmeldetag: **06.04.2011**

(54) **Kommutierungsverfahren, Kommutierungsschaltung und elektrischer Energiewandler**

Commutation method, commutation circuit and electric power converter

Procédé de commutation, circuit de commutation et convertisseur d'énergie électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2010 DE 102010014142**

(43) Veröffentlichungstag der Anmeldung:
**12.10.2011 Patentblatt 2011/41**

(73) Patentinhaber: **alpitronic GmbH**
**39100 Bozen (IT)**

(72) Erfinder: **Ciceri, Alessandro**
**39049 Sterzing (IT)**

(74) Vertreter: **Charrier, Rapp & Liebau**
**Patentanwälte**
**Fuggerstrasse 20**
**86150 Augsburg (DE)**

(56) Entgegenhaltungen:
**US-A- 5 047 913     US-A1- 2006 109 694**

• ERHARTT L L ET AL: "A NOVEL LOW-LOSS SWITCHING METHOD FOR CONVERTERS USING TURN-OFF POWER SWITCHES (IGBTS GTOS ETC.)", ELECTRONIC POWER SUPPLY SYSTEMS. BRIGHTON, SEPT. 13 - 16, 1993; [PROCEEDINGS OF THE EUROPEAN CONFERENCE ON POWER ELECTRONICS AND APPLICATIONS], LONDON, IEE, GB, Bd. 3, 13. September 1993 (1993-09-13), Seiten 46-51, XP000427000,

**Beschreibung**

Die Erfindung betrifft ein Kommutierungsverfahren nach dem Oberbegriff des Anspruchs 1, eine Kommutierungsschaltung nach dem Oberbegriff des Anspruchs 8 und einen elektrischen Energiewandler nach dem Oberbegriff des Anspruchs 15.

Kommutierungsschaltungen und -verfahren zur möglichst energiesparenden und verlustfreien Schaltung von elektrischen Energiewandlern, beispielsweise Brückenschaltungen, DC-DC-Wandler etc, sind aus dem Stand der Technik bekannt. Gemeinsam ist den bekannten Kommutierungsschaltungen, dass sie bei aus zwei steuerbaren Schaltern gebildeten Halbbrücken versuchen, die beim konventionellen, harten Ein- bzw. Aus-Schalten der Halbbrücken-Halbleiterschalter entstehende Verlustleistung zu minimieren. Hierbei werden u.a. sogenannte resonante Schalttopologien verwendet, um die Halbleiterschalter vor dem Einschalten spannungsfrei zu setzen. Hierdurch schalten die Halbleiterschalter quasi verlustlos.

Ein bekannter Energiewandler ist in der WO2009/027758 A1 offenbart. Dort wird parallel zu Hauptschaltern jeweils ein Hilfsschalter mit zugeordneter Serieninduktivität parallel geschaltet, ebenso wie Umschwingkapazitäten parallel zu den Hauptschaltern der Brücke geschaltet werden. Um die Spannung an einem der Hauptschalter vor dessen Einschalten auf null zu bringen, wird einer der zugehörigen Hilfsschalter eingeschaltet, so dass die Spannung aufgrund eines LC-Umschwingkreises während einer Halbperiode im Idealfall auf Null schwingt, so dass der betreffende Hauptschalter im Idealfall spannungsfrei eingeschaltet werden kann. Da der dort gezeigte LC-Umschwingkreis in der Realität jedoch immer mit parasitären Widerständen behaftet ist und somit nur gedämpft schwingt, wird die Spannung am Hauptschalter vor dem Einschalten nicht zu null, sondern weicht geringfügig hiervon ab. Auch wenn diese Abweichung nur wenige Volt beträgt, ergibt sich aufgrund der bei leistungselektronischen Schaltungen hohen geschalteten Ströme und Spannungen, beispielsweise bei Motorantrieben, und der gewünschten hohen Schaltfrequenz von 20 KHz und mehr unerwünschte Schaltverluste und somit eine unerwünscht starke Erwärmung der Bauteile und Schaltungen, welche entsprechend aufwendige Kühlmaßnahmen erfordern. Die Abführung der Wärme führt zu größerem Bauraum und höherem Aufwand, welche wiederum die Effektivität der Energieumwandlung deutlich verringern und die Kosten erhöhen. Hinzu kommt, dass aufgrund des Schaltens der Halbbrücke bei Spannung ungleich null die dortigen Umschwingkondensatoren kurzgeschlossen werden, was zu hohen Stromspitzen führen kann. Dies ist sowohl aus Gründen der EMV als auch der Bauteilbelastung ungünstig. Zudem ist ein genaues Timing der Hilfsschalter in Abhängigkeit von der Last erforderlich, um die Hauptschalter im Spannungsminimum zu schalten.

Die US 5 572 418 A betrifft einen quasi-resonanten PWM-Inverter mit einer Umschwingschaltung, welche den Resonanzkreises durch das Beaufschlagen einer Spannung, welche dem Betrag nach mehr als die Hälfte der DC-Eingangsspannung beträgt, derart angeregt, dass die Ausgangsspannung beim Umschwingvorgang über die Schienenspannungen hinausschießt. Die Spannung, mit der der Resonanzkreis angeregt wird, wird durch die Teilung der DC-Spannung mit zwei Teilerpunkten auf zwei Teilerpotentiale erzeugt. Die Unterteilung der DC-Spannung in zwei Teilerpotentiale wird unter Zuhilfenahme von Batterien bzw. Kondensatoren bewerkstelligt. Beim Schließen der Hilfsschalter zur Anregung des Resonanzkreises mit einem der zwei Teilerpotentiale werden die dortigen Hilfsdioden und Hilfsschalter vom gesamten Resonanzstrom durchströmt, was zu einer nachteiligen sehr hohen Strombeanspruchung führt, so dass diese Bauteile fast gleich groß wie die Hauptschalter ausgelegt werden müssen, was zu einem größeren Bauraum und höheren Kosten führt. Die zur Teilung des DC-Spannung verwendeten Batterien bzw. Kondensatoren werden unterschiedlich geladen und entladen, weshalb eine spezielle Ladevorrichtung nötig ist, um die Batterien bzw. Kondensatoren auf demselben Ladungsniveau zu halten. Dies ist bei der praktischen Umsetzung mit hohen Kosten verbunden und im Betrieb verlustbehaftet. Aus Kostengründen ist eine solche Schaltung mit drei Batterien bzw. Kondensatoren kaum praktisch umzusetzen. Zudem werden die Batterien bzw. Kondensatoren mit hohen Pulsströmen belastet und müssen deshalb überdimensioniert werden, was zu einem größeren Bauraum führt.

Die US 5 047 913 A betrifft einen allgemeinen Leistungswandler und ein Verfahren zum Steuern eines Schwingungsleistungswandlers durch geeignetes Steuern einer Hilfsschwing-Kommutierungsschaltung, um ein weiches Schalten der Schaltvorrichtungen des Wandlers zu erzielen. Dort wird mittels einer Ausgangsspannung aus dem Schwingkreis an dem Knotenpunkt der Hauptschaltvorrichtungen versucht, über die Schienenspannungen während jedes Schwingungsintervalles hinauszuschießen bzw. diese mindestens zu erreichen, indem der Resonanzkreis vor dem Umschwingen zusätzlich zum Lastrom mit einem Zusatzstrom beaufschlagt wird. Dies weist den Nachteil auf, dass die Aufladung des Resonanzkreises zum Erreichen des Hinausschießens (Boost) durch Addition eines Stromoffsets erreicht wird, weshalb die Hauptschalter mit sehr genauem Timing zum bestmöglichen Zeitpunkt geöffnet werden müssen. Da der Zeitpunkt zum Öffnen der Hauptschalter abhängig vom Laststrom ist, dauert die Übernahme durch das Resonanzglied länger oder weniger lang, was das genaue Timing erfordert. Zusätzlich werden die Hauptschalter beim Öffnen der Hauptschalter durch den Vorspannstrom für den Boost zusätzlich belastet. Auch bestehen hier die oben zur US 5 572 418 A beschriebenen Nachteile for die Hilfsschalter und Dioden, wie z.B. hohe Strombelastung und Schaltverluste, da der gesamte Resonanzstrom übernommen werden muss. Zudem ist ein geteilter Zwischenkreiskondensator aufwändig und teuer. Auch werden die beiden Zwischenkreiskondensatoren nicht gleichmäßig beansprucht. Der Punkt mit halber Zwischenkreisspannung wird umgeladen und muss durch eine separate Schaltung innerhalb der gewünschten Toleranz gehalten werden, was teuer und somit ungünstig für die Realisierung ist.

Die US 2006/109694 A1 betrifft eine quasiresonante Hilfswandlerschaltung mit drei Schwingkreiskondensatoren, die durch einen Transformator und einen Brückengleichrichter geladen werden. Die Schwingkreiskondensatoren stellen dann eine Spannung für einen multiresonant schaltenden Wandler bereit.

Die Veröffentlichung "A novell low-loss switching method for converters using turn-off power switches (IGBTS GTOS etc.)", Erhardt L.L. et. al., Electronics Power Supply Systems, Brighton, Sept. 13-16. 1993 [Proceedings of the European Conference on Power Electronics and Applications], London, IEE, GB, Bd. 3, 13. September 1993 (1993-09.13), S. 46-51 offenbart eine Kommutierungsschaltung mit Reihenschaltung von Umschwinginduktivität und Umschwingkapazität.

Der Erfindung liegt deshalb die Aufgabe zugrunde, eine Kommutierungsschaltung, einen elektrischen Energiewandler sowie ein Kommutierungsverfahren zu schaffen, welche die oben genannten Nachteile überwinden und die Schaltverluste minimieren. Weiter soll die Erfindung eine einfache Ansteuerung und einen einfachen Aufbau der Schaltung und Vorrichtung ermöglichen.

Diese Aufgabe löst die Erfindung durch ein Kommutierungsverfahren mit den Merkmalen des Anspruchs 1, eine Kommutierungsschaltung mit den Merkmalen des Anspruchs 8 und einen elektrischen Energiewandler mit den Merkmalen des Anspruchs 15.

Das erfindungsgemäße Kommutierungsverfahren ist dadurch gekennzeichnet, dass während des Umschwingens die Hauptschalter geöffnet sind und an den Steuereingang eine Steuerspannung angelegt wird, die um einen Spannungsbetrag größer null näher am Zielpotential als am Startpotential liegt, wobei die Steuerspannung durch mindestens einen Transformator mit mindestens zwei Wicklungen eingestellt wird. Die erfindungsgemäße Kommutierungsschaltung weist hierzu u.a. mindestens einen ersten Transformator mit mindestens einer ersten Wicklung und mindestens einer zweiten Wicklung auf, wobei die erste Wicklung mit einem Anschluss mit dem Steuerausgang verbunden und mit ihrem anderen Anschluss über ein erstes Verbindungselement mit dem Versorgungsanschluss oder dem Potentialanschluss verbindbar ist, wobei das Wicklungsverhältnis 1:$\ddot{u}$ von erster Wicklung zu zweiter Wicklung so eingestellt ist, dass zumindest während des Umschwingvorgangs die zwischen Steuerausgang und Potentialanschluss bereitgestellte Steuerspannung um einen Spannungsbetrag größer 0 V näher am Zielpotential als am Startpotential liegt. Hierdurch wird am Ende des Umschwingvorgangs sicher das Zielpotential erreicht, so dass der betreffende Hauptschalter vollkommen spannungsfrei geschaltet werden kann.

Vorteilhaft kann die Ausgangsspannung auf den Wert des Zielpotentials begrenzt werden, sobald die Ausgangsspannung beim Umschwingen das Zielpotential überschreitet. Hierdurch ergibt sich eine relativ lange Zeitdauer, während der der einzuschaltende Hauptschalter spannungsfrei eingeschaltet werden kann. Eine aufwändige Detektion des Zeitpunkts, zu dem die Ausgangsspannung dem Zielpotential am nächsten kommt, wie bei bekannten Verfahren, oder bei dem die Ausgangsspannung dem Zielpotential gleicht, ist somit nicht mehr notwendig. Bevorzugt kann dabei der der zum Anlegen des Zielpotentials an den Spannungsausgang vorgesehene Hauptschalter eingeschaltet werden, solange die Ausgangsspannung auf den Wert des Zielpotentials begrenzt wird. Besonders vorteilhaft kann dieser Hauptschalter eingeschaltet werden, bevor der Strom durch seine Freilaufdiode abgebaut ist.

Im Gegensatz zu den aus WO2009/027758 A1 bekannten Verfahren und Vorrichtungen erreicht bei der Erfindung die Schaltspannung die beiden Zwischenkreispotentiale vollständig. Durch den sogenannten Boost klemmt vorliegend die Schaltspannung für eine einstellbare Zeit an den Zwischenkreispotentialen, so dass die Hauptschalter diese gesamte Zeitspanne spannungsfrei geschlossen werden können. Während in US 5 047 913 A die Steuerung der Schalter vom Laststrom abhängig ist und diese zu einem genauen Zeitpunkt geöffnet und geschlossen werden müssen, können bei der Erfindung Hilfsschalter und Hauptschalter (Verbindungselemente) mit einem festen Timing lastunabhängig gesteuert werden. Im Gegensatz zu den oben beschriebenen Verfahren und Vorrichtungen werden die Verbindungselemente wie Hilfsschalter und Dioden vorliegend, insbesondere in einer bevorzugten Ausführung der Erfindung, nur durch einen Teil des Resonanzstroms durchströmt und können somit auf geringere Ströme ausgelegt werden. Durch die Verwendung des Transformators bzw. seiner Induktivitäten zur Bereitstellung der Boostspannung bzw. Steuerspannung können Probleme mit dem unsymmetrischen Umladen, welche bei der bekannten kapazitiven Bereitstellung der Boostspannung bzw. der Steuerspannung in US 5 572 418 A und in US 5 047 913 A entstehen, vermieden werden. Ebenso verursachen die Pulsströme des Resonanzkreises keine Verkürzung der Lebensdauer des oder der Transformatoren, während bei der bekannten Verwendung von Kapazitäten zur Bereitstellung der Boostspannung die Pulsströme ein wesentliches Auslegungskriterium für die Lebensdauer der Kapazitäten darstellen. Im Gegensatz zu US 5 572 418 A, in der die Boostspannung zur Anregung des Resonanzkreises dauerhaft über Kondensatoren erzeugt wird und zur Anregung des Resonanzkreises über Schalter an diesen angelegt wird, wird in der Erfindung die Boostspannung lediglich für den Zeitraum des Umschwingvorgangs mit Hilfe von geschalteten Transformatoren erzeugt.

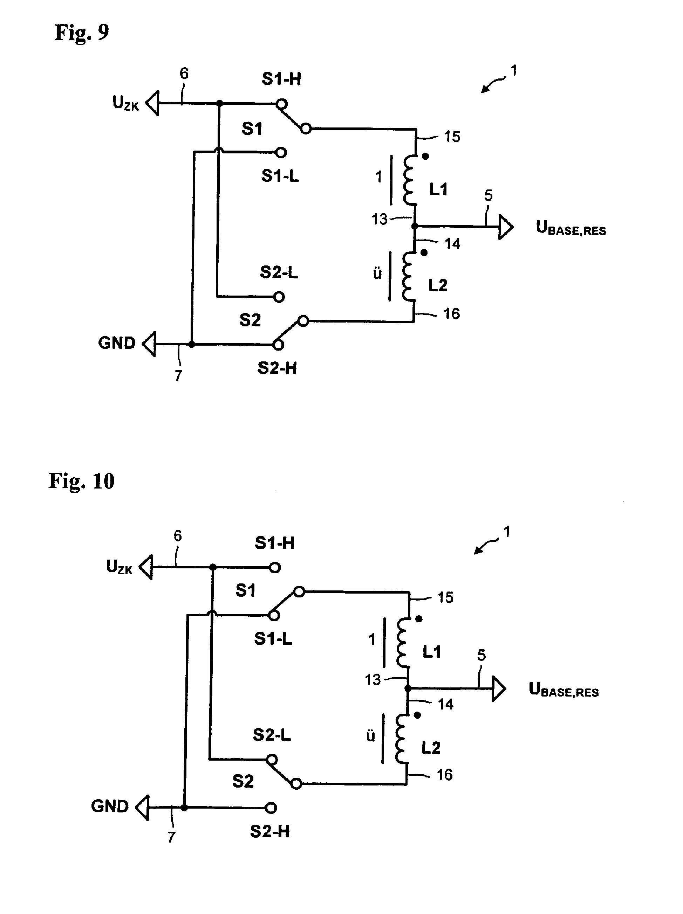

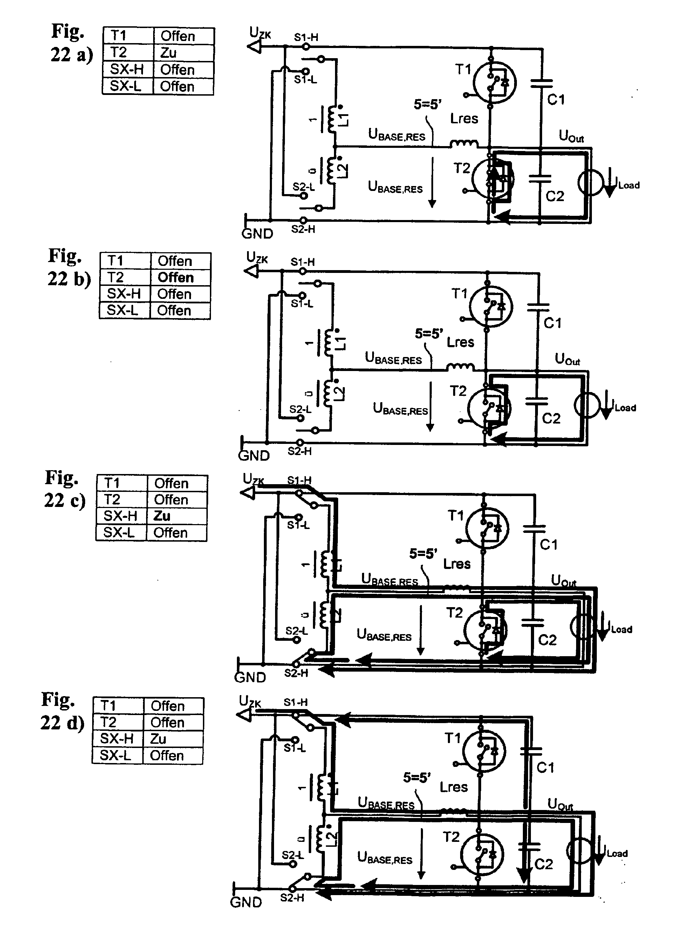

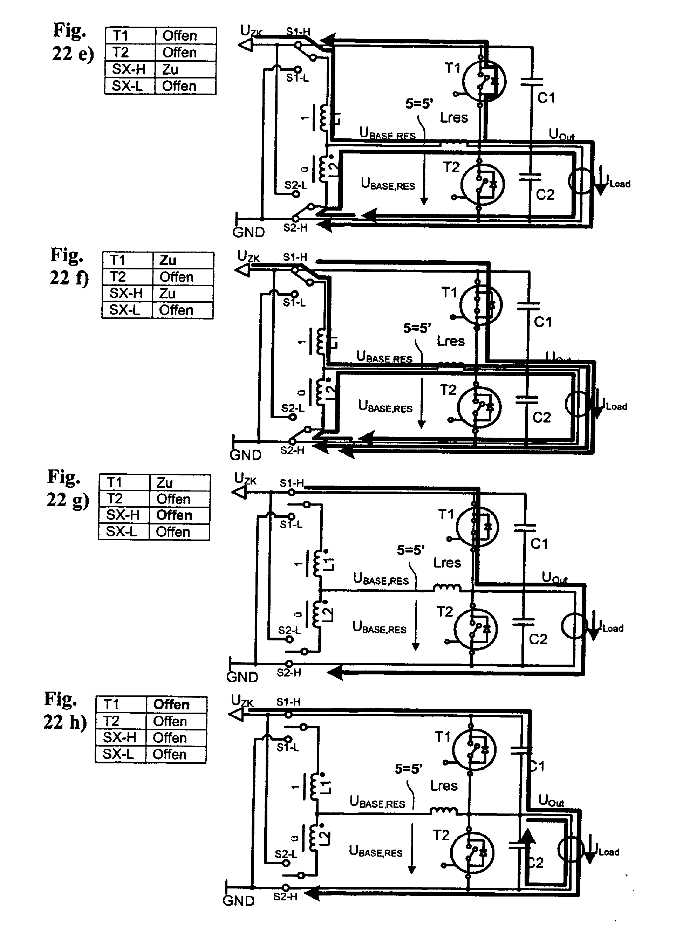

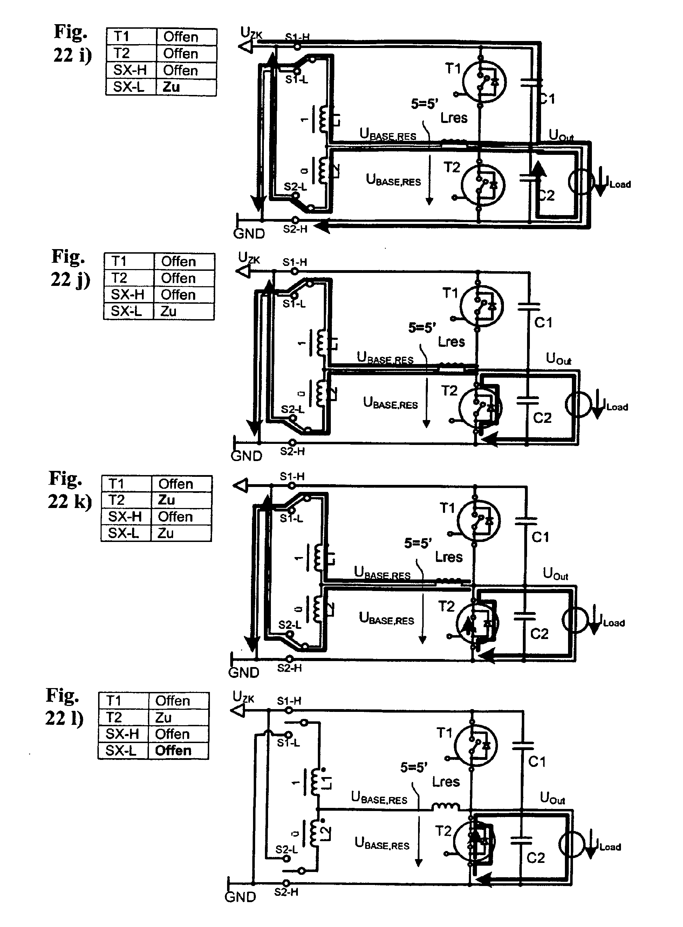

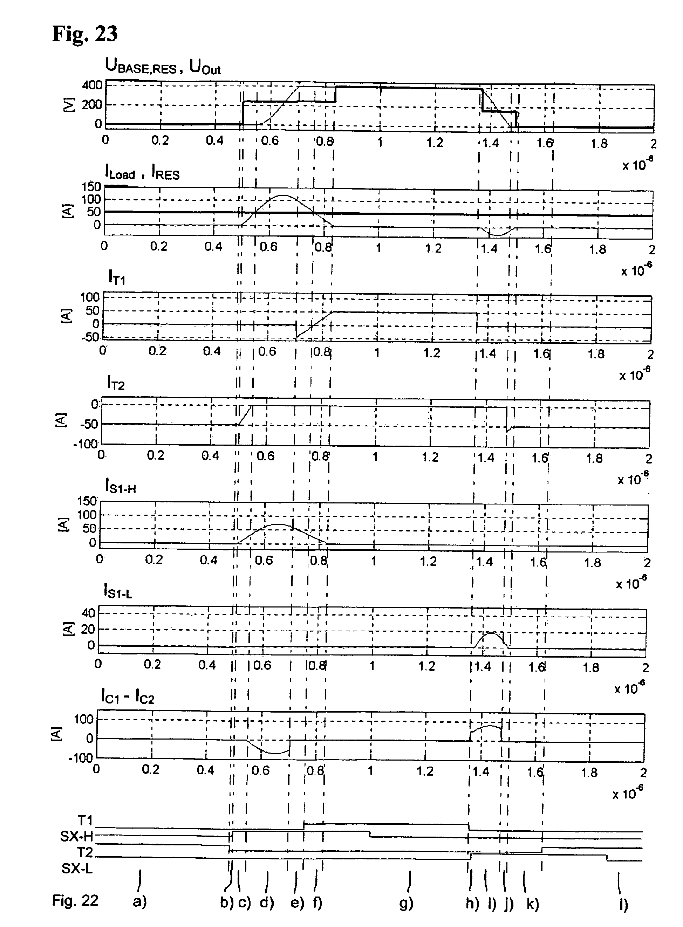

Ein Konzept des Kommutierungsverfahrens mit den Merkmalen des Anspruchs 4 oder 5 betrifft insbesondere eine erfindungsgemäße Kommutierungsschaltung nach Anspruch 15 und ist in Fig. 22 und 23 detailliert beschrieben. Vorteilhafte Ausführungen dieser Kommutierungsschaltungen sind in Fig. 9, 10, 14, 18 und 19 gezeigt und in den zugehörigen Passagen der Beschreibung ausführlich erläutert.

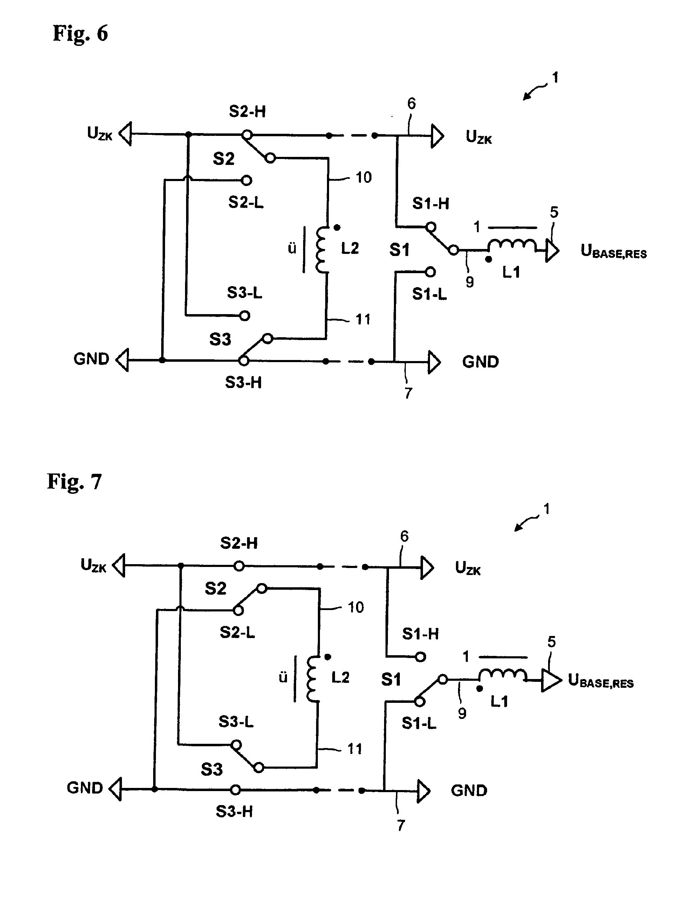

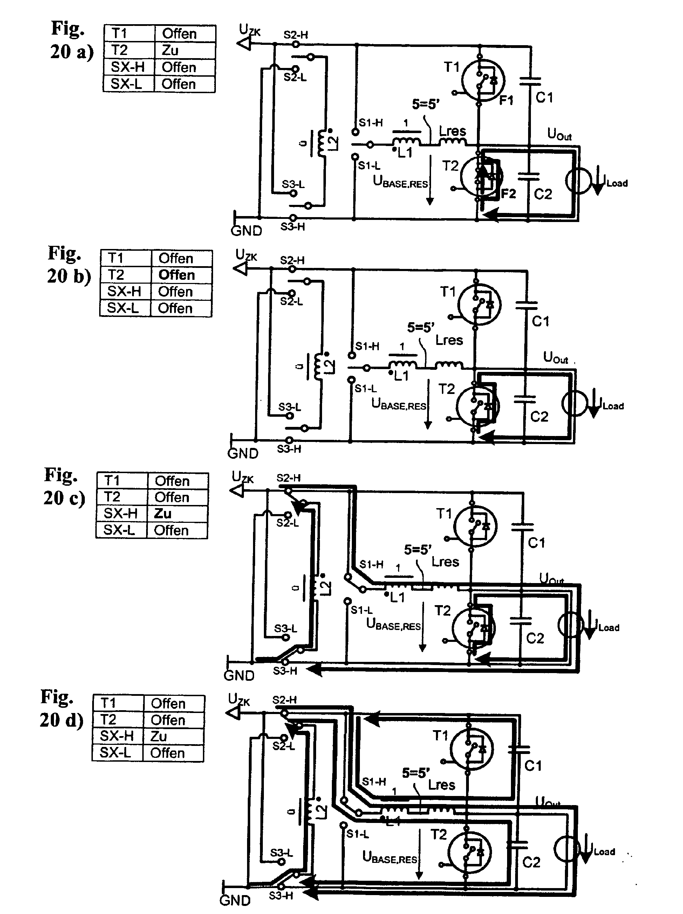

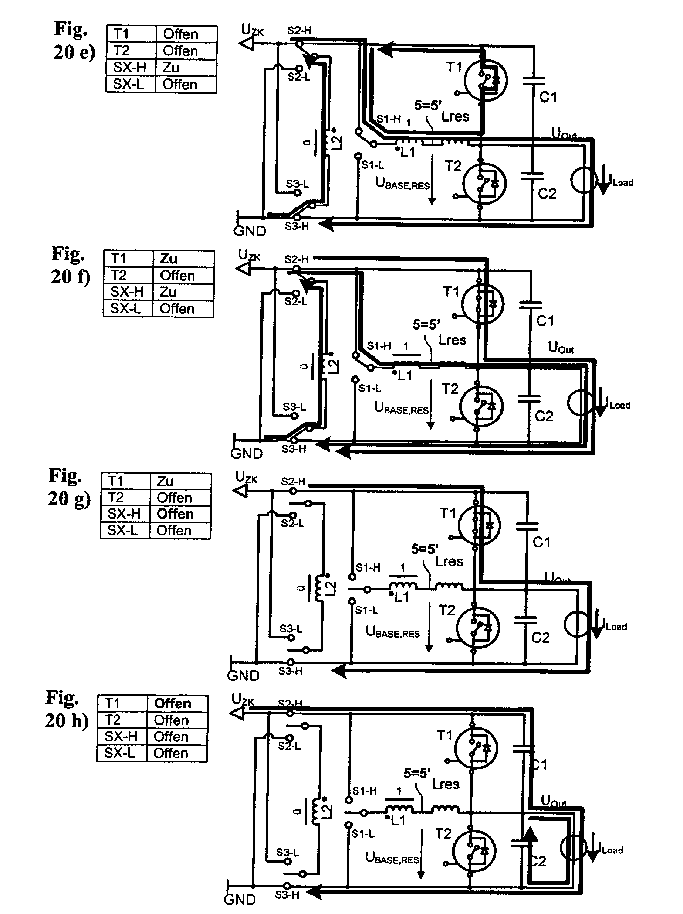

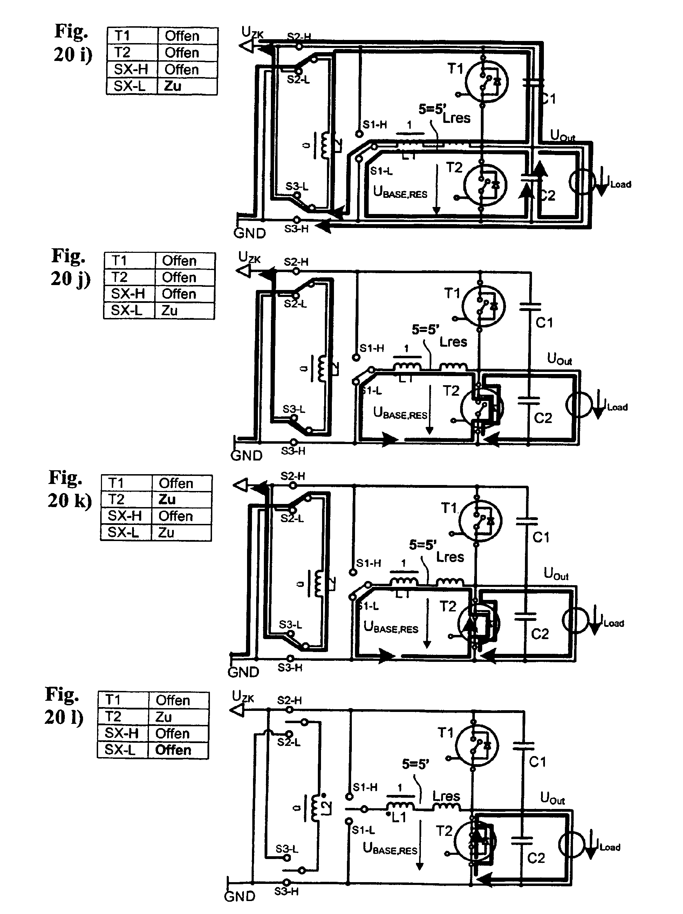

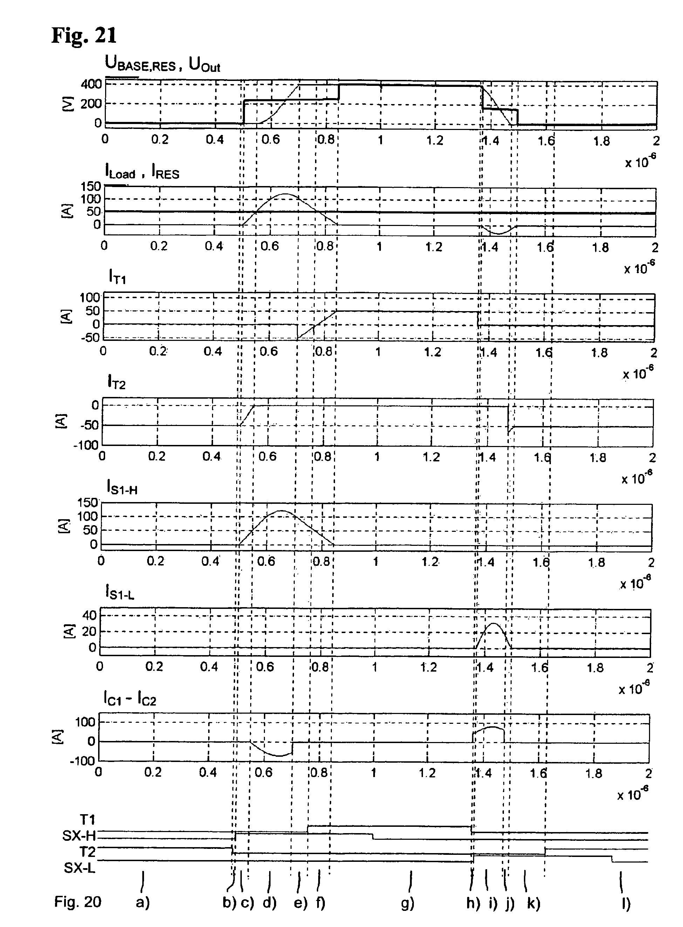

Ein weiteres Konzept des Kommutierungsverfahrens mit den Merkmalen eines der Ansprüche 6 bis 7 betrifft insbesondere eine erfindungsgemäße Kommutierungsschaltung nach einem der Ansprüche 10 bis 14 und ist in Fig. 20 und 21 detailliert beschrieben. Vorteilhafte Ausführungen dieser Kommutierungsschaltungen sind in Fig. 6, 7, 13, 16 und 17 gezeigt und in den zugehörigen Passagen der Beschreibung ausführlich erläutert.

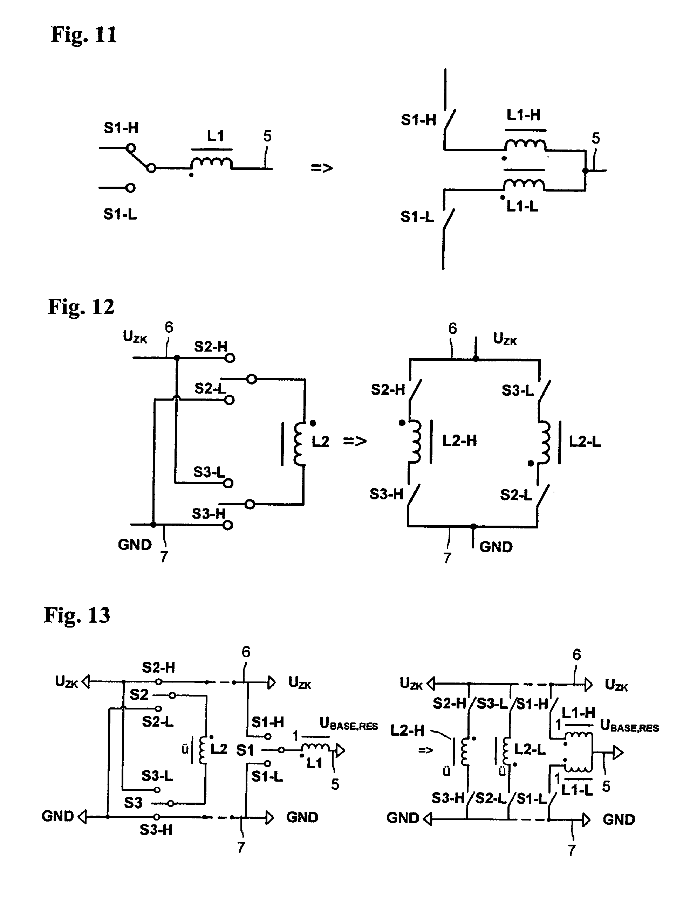

In einer vorteilhaften Ausgestaltung dieses Konzepts, wie es auch in Fig. 13 dargestellt ist, kann das erste Verbindungselement aus einem ersten Teilverbindungselement zur Verbindung der ersten Wicklung nur mit dem Versorgungsanschluss, das zweite Verbindungselement aus einem zweiten Teilverbindungselement zur Verbindung eines Anschlusses der zweiten Wicklung nur mit dem Versorgungsanschluss oder dem ersten Hilfsanschluss und das dritte Verbindungselement aus einem dritten Teilverbindungselement zur Verbindung des anderen Anschlusses der zweiten Wicklung nur mit dem Potentialanschluss oder dem zweiten Hilfsanschluss bestehen, und ein zweiter Transformator vorgesehen sein, dessen erste Wicklung einerseits mit dem Steuerausgang verbunden und andererseits über ein viertes Teilverbindungselement nur mit dem Potentialanschluss verbindbar ist, dessen zweite Wicklung einerseits über ein fünftes Teilverbindungselement nur mit dem Versorgungsanschluss oder dem ersten Hilfsanschluss und andererseits über ein sechstes Teilverbindungselement nur mit dem Potentialanschluss oder dem zweiten Hilfsanschluss verbindbar ist, wobei das Wicklungsverhältnis 1:$ü$ zwischen erster Wicklung und zweiter Wicklung des zweiten Transformators im gleichen Bereich liegt wie das des ersten Transformators.

Bei diesem Konzept der Kommutierungsschaltung können die zweite Wicklung oder zweiten Wicklungen statt mit Zielpotential und Startpotential verbunden zu werden mit einer entsprechend gepolten Hilfsspannungsquelle verbunden werden, wobei das Wicklungsverhältnis 1:$ü$ zwischen erster Wicklung und zweiter Wicklung bzw. ersten Wicklungen und zweiten Wicklungen jeweils so angepasst ist, dass die an der ersten Wicklung induzierte Spannung dem in Alternativen a) oder b) von Anspruch 6 angegebenen Betrag entspricht.

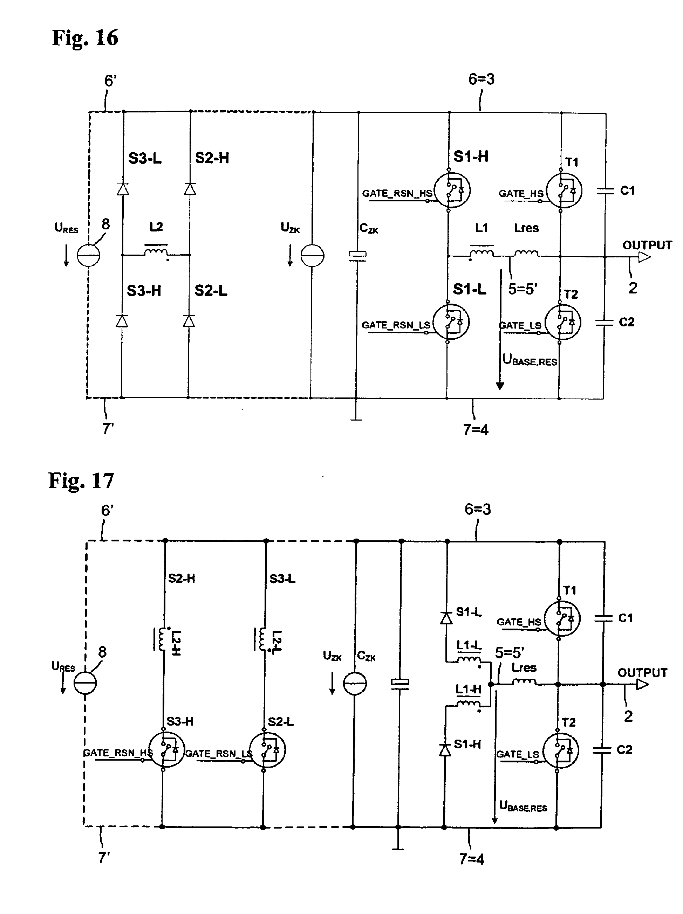

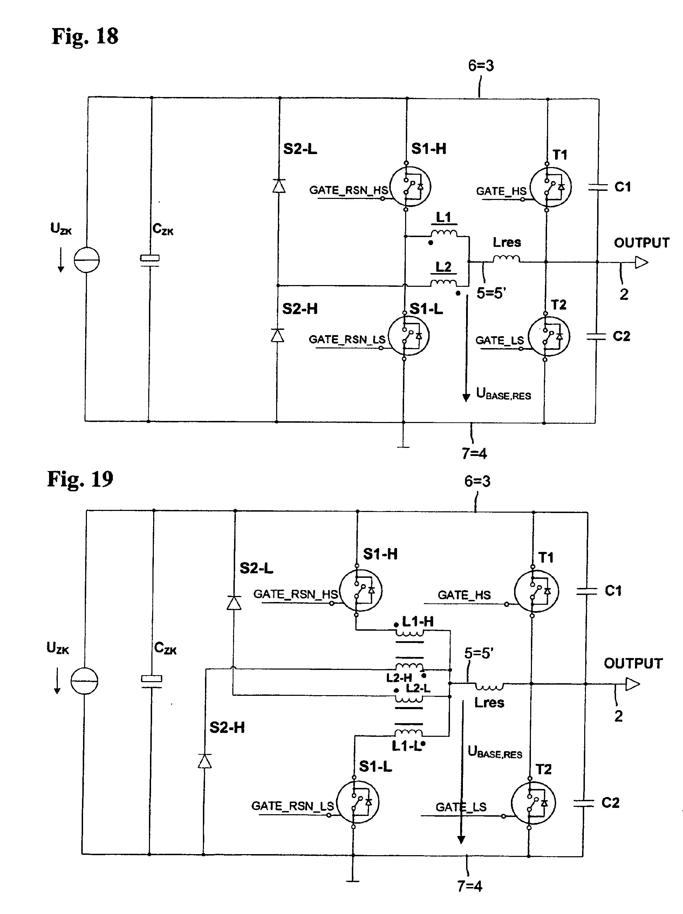

Bei einer erfindungsgemäßen Kommutierungsschaltung nach einem der Ansprüche 8 bis 12 kann mindestens eines der Verbindungselemente als Schalt-Halbbrücke aus steuerbaren Halbleiterbauelementen gleicher Durchlassrichtung mit antiparallelen Freilaufdioden und die anderen Verbindungselemente als Dioden-Halbbrücken mit gleicher Durchlassrichtung und/oder als Schalt-Halbbrücke gebildet sein, wobei die zugehörigen Wicklungen jeweils am Verbindungspunkt der Bauelemente der jeweiligen Halbbrücke angeschlossen sind. Realisierungen dieser Kommutierungsschaltungen sind in Fig. 16 und 18 dargestellt.

Bei der erfindungsgemäßen Kommutierungsschaltung können mit den zusätzlichen Merkmalen des Anspruchs 13 insbesondere die erste und/oder zweite Wicklung auf jeweils zwei Teilwicklungen aufgeteilt werden. Vorteilhafte Realisierungen von Kommutierungsschaltungen mit derartig aufgeteilten Wicklungen sind in Fig. 11, 12, 13, 14, 17 und 19 gezeigt und in den zugehörigen Passagen der Beschreibung ausführlich erläutert. Hierbei können die Teilverbindungselemente vorteilhaft durch ansteuerbare elektronische Halbleiterbauelemente (IGBT, MOSFET, Leistungstransistoren, GTO etc.), Dioden oder als feste Verbindungen realisiert werden.

Insbesondere bei der in Fig. 13 und 17 gezeigten Kommutierungsschaltung können bei jeder der Teilwicklungen der zweiten Wicklung eines der Teilverbindungselemente durch eine feste Verbindung ersetzt werden, wodurch die Anzahl der teuren und gegen Störfälle empfindlichen Halbleiterbauelemente, mit denen die Teilverbindungselemente realisiert werden, reduziert wird. Bevorzugt können dies bei der Schaltung nach Fig. 13 bzw. 17 die zur Versorgungsspannung weisenden Teilverbindungselemente sein, so dass die Ansteuersignale der gegen Bezugspotential weisenden Teilverbindungselemente auf das ohnehin vorhandene Bezugspotential bezogen werden können, was die Kommutierungsschaltung noch weiter vereinfacht.

In einer vorteilhaften Ausgestaltung des Konzepts der Kommutierungsschaltung mit Verschaltung des Steuerausgangs mit erster und zweiter Wicklung kann das erste Verbindungselement aus einem ersten Teilverbindungselement zur Verbindung der ersten Wicklung nur mit dem Versorgungsanschluss und das zweite Verbindungselement aus einem zweiten Teilverbindungselement zur Verbindung der zweiten Wicklung nur mit dem Potentialanschluss bestehen, und ein zweiter Transformator mit einem Wicklungsverhältnis 1:$ü$ zwischen seiner ersten Wicklung und zweiten Wicklung vorgesehen sein, dessen erste und zweite Wicklung einerseits mit dem Steuerausgang verbunden sind und dessen erste Wicklung andererseits über ein drittes Teilverbindungselement nur mit dem Potentialanschluss und dessen zweite Wicklung andererseits über ein viertes Teilverbindungselement nur mit dem Versorgungsanschluss verbindbar sind, und sein Wicklungsfaktor $ü$ = $(1+2k)/(1-2k)$ mit $0 < k < 0,5$ beträgt.

Weiter kann bei einer vorteilhaften Ausgestaltung der Kommutierungsschaltung mindestens eine der Wicklungen aus einer ersten Teilwicklung und einer zweiten Teilwicklung und mindestens eines der an diese Wicklung angeschlossenen Verbindungselemente aus zwei Teilverbindungselementen gebildet sein, wobei die Teilwicklungen einerends miteinander und vorzugsweise mit dem Steuerausgang verbunden sind, und der andere Anschluss der ersten Teilwicklung mit dem ersten Teilverbindungselement mit dem Versorgungsanschluss und der andere Anschluss der zweiten Teilwicklung mit dem zweiten Teilverbindungselement mit dem Potentialanschluss verbindbar sind. Alternativ oder zusätzlich kann bei einer vorteilhaften Ausgestaltung der Kommutierungsschaltung mindestens eine der Wicklungen aus einer ersten Teilwicklung und einer zweiten Teilwicklung und an diese Wicklung beidseits angeschlossene Verbindungselemente jeweils aus zwei Teilverbindungselementen gebildet sein, wobei jede der Teilwicklungen mit je einem Teilverbindungselement mit dem Versorgungsanschluss und mit je einem anderen Teilverbindungselement mit dem Potentialanschluss verbindbar sein kann.

Insbesondere kann bei einer Kommutierungsschaltung nach der zweiten Alternative von Anspruch 13 und Fig. 17 mindestens eine der Wicklungen aus einer ersten Teilwicklung und einer zweiten Teilwicklung und die an diese mindestens eine Wicklung angeschlossenen Verbindungselemente aus zwei Teilverbindungselementen gebildet sein, wobei die erste Teilwicklung jeweils mit dem oder den ersten Teilverbindungselementen und die zweite Teilwicklung jeweils mit dem oder den zweiten Teilverbindungselementen verbunden sind, wobei insbesondere mindestens zwei der Teilverbindungselemente aus steuerbaren Halbleiterbauelementen gleicher Durchlassrichtung mit antiparallelen Freilaufdioden und die anderen Teilverbindungselemente als Dioden mit gleicher Durchlassrichtung und/oder als feste Verbindungen gebildet sein können.

Für den Fall, dass alle Wicklungen aus zwei Teilwicklungen gebildet sind, können die ersten Teilwicklungen einem ersten Transformator zugewiesen werden und die zweiten Teilwicklungen einem zweiten Transformator.

Zudem kann aufgrund der langen Zeitdauer, während der die Hauptschalter des Energiewandlers spannungsfrei eingeschaltet werden können, die Kommutierungsschaltung mit den gleichen Ansteuersignalen wie die Hauptschalter angesteuert werden. Hierbei kann anhand des Ansteuersignals für den jeweiligen Hauptschalter zunächst der jeweilige Umschwingvorgang für diesen Hauptschalter eingeleitet werden, und dann mit einer durch die bekannten Betriebsparameter des Energiewandlers und seiner Bauteile vorgegebenen Einschaltverzögerung der betreffende Hauptschalter eingeschaltet werden. Die Einschaltverzögerung und die Kommutierungsschaltung können dabei für vorgegebene Parameter des Energiewandlers bevorzugt fest verdrahtet (hard-wired) in eine Baugruppe integriert werden. Alternativ kann durch eine an die Kommutierungsschaltung anschließbare externe Zeitverzögerungsschaltung vorteilhaft die Einschaltverzögerung einstellbar gemacht werden, z.B. durch ein einstellbares RC-Verzögerungsglied.

Ein erfindungsgemäßer elektrischer Energiewandler ist dadurch gekennzeichnet, dass eine oben angegebene Kommutierungsschaltung vorgesehen ist, deren Versorgungsanschluss mit dem Versorgungsspannungsanschluss, deren Potentialanschluss mit dem Bezugspotentialanschluss und deren Steuerausgang mit dem Steuereingang verbunden ist. Hierdurch und durch die Verwendung des oben beschriebenen Kommutierungsverfahrens bei dem Energiewandler wird ein besonders energiesparender Umschwingvorgang ermöglicht. Der Energiewandler kann vorteilhaft mit dem oben genannten Kommutierungsverfahren angesteuert werden.

Der erfindungsgemäße Energiewandler kann vorzugsweise eine Umschwinginduktivität aufweisen, die durch eine zwischen Spannungsausgang der Kommutierungsschaltung und Steuereingang geschaltete externe Induktivität und/oder durch die Streuinduktivität des oder der am Steuerausgang verbundenen Transformatoren der Kommutierungsschaltung gebildet ist. Ggf. kann die Umschwinginduktivität auch eine Zuleitungsinduktivität der Leitungen vom Spannungsausgang des Energiewandlers zum Steuereingang bzw. dem Steuerausgang der Kommutierungsschaltung enthalten.

In einer bevorzugten Ausführung kann der Energiewandler am Spannungsausgang mit einer elektrischen Last, besonders bevorzugt mit einer induktiven Last wie einem Antriebsmotor, verbunden sein. Beispielsweise können bei einer dreiphasigen Last wie einer Synchronmaschine oder einer Asynchronmaschine für jede der drei Wicklungen der Maschinen ein eigener Energiewandler vorgesehen werden. Die Last kann z.B. zwischen Spannungsausgang und Bezugspotential oder Versorgungsspannung geschaltet sein. Grundsätzlich kann die Last sowohl motorisch als auch generatorisch betrieben werden.

Weitere Besonderheiten und Vorzüge der Erfindung ergeben sich aus der folgenden Beschreibung bevorzugter Ausführungsbeispiele anhand der Zeichnungen. Es zeigen:

Fig. 1        ein Blockschaltbild eines erfindungsgemäßen Energiewandlers;

Fig. 2        Spannungszeitverläufe eines Umschwingvorgangs bei einem idealen LCUmschwingkreis;

Fig. 3        Spannungszeitverläufe eines Umschwingvorgangs bei einem gedämpften LCUmschwingkreis;

Fig. 4        Spannungszeitverläufe während eines Abschwingvorgangs;

Fig. 5        Spannungszeitverläufe während eines Aufschwingvorgangs;

Fig. 6        ein Blockschaltbild einer ersten Ausführung einer erfindungsgemäßen Kommutierungsschaltung aus Fig. 1 mit Verbindungsstellung für einen Aufschwingvorgang;

Fig. 7          das Blockschaltbild aus Fig. 6 mit Verbindungsstellung für einen Abschwingvorgang;

Fig. 8          ein Blockschaltbild einer Variante der Schaltung in Fig. 6 und 7;

Fig. 9          ein Blockschaltbild einer zweiten Ausführung einer erfindungsgemäßen Kommutierungsschaltung aus Fig. 1 mit Verbindungsstellung für einen Aufschwingvorgang;

Fig. 10         das Blockschaltbild aus Fig. 9 mit Verbindungsstellung für einen Abschwingvorgang;

Fig. 11         ein Blockschaltbild einer elektrischen Entkopplung der Verbindungselemente;

Fig. 12         ein Blockschaltbild einer alternativen elektrischen Entkopplung der Verbindungselemente;

Fig. 13         ein Blockschaltbild einer magnetischen Entkopplung der Wicklungen aus Fig. 6 und 7;

Fig. 14         ein Blockschaltbild einer magnetischen Entkopplung der Wicklungen aus Fig. 9 und 10;

Fig. 15         Realisierungsmöglichkeiten für die in Fig. 6 bis 14, 20 und 22 dargestellten Verbindungselemente;

Fig. 16         eine erste schaltungstechnische Realisierung der in Fig. 6 und 7 gezeigten Ausführung mit Verbindungselementen nach Fig. 15;

Fig. 17         eine zweite schaltungstechnische Realisierung der in Fig. 6 und 7 gezeigten Ausführung nach der Variante aus Fig. 8 mit magnetischer Entkopplung nach Fig. 13 und Verbindungselementen nach Fig. 15;

Fig. 18         eine erste schaltungstechnische Realisierung der in Fig. 9 und 10 gezeigten Ausführung mit Verbindungselementen nach Fig. 15;

Fig. 19         eine zweite schaltungstechnische Realisierung der in Fig. 9 und 10 gezeigten Ausführung mit magnetischer Entkopplung nach Fig. 14 und Verbindungselementen nach Fig. 15;

Fig. 20 a-l     Blockschaltbilder mit Stromverläufen und zugehörigen Verbindungsstellungen für einen vollständigen Umschaltvorgang eines erfindungsgemäßen Energiewandlers mit Kommutierungsschaltung nach Fig. 6 und 7;

Fig. 21         Strom- und Spannungsverläufe des Schaltzyklus' nach Fig. 20;

Fig. 22 a-l     Blockschaltbilder mit Stromverläufen und zugehörigen Verbindungsstellungen für einen vollständigen Umschaltvorgang eines erfindungsgemäßen Energiewandlers mit Kommutierungsschaltung nach Fig. 9 und 10;

Fig. 23         Strom- und Spannungsverläufe des Schaltzyklus' nach Fig. 22;

Fig. 24         ein Blockschaltbild einer herkömmlich angesteuerten Halbbrücke;

Fig. 25         ein Blockschaltbild einer erfindungsgemäß angesteuerten Halbbrücke;

Fig. 26         Zeitverläufe der Ansteuersignale zu den Blockschaltbildern aus Fig. 24 und 25.

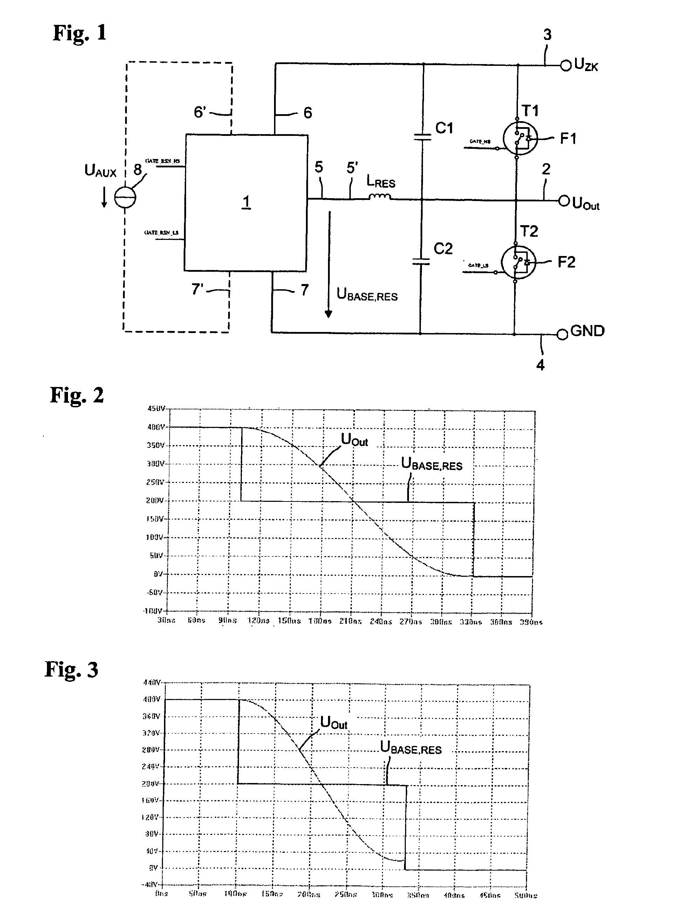

In Fig. 1 ist eine erfindungsgemäße Kommutierungsschaltung 1 als Teil eines erfindungsgemäßen elektrischen Energiewandlers gezeigt, der zur Energieversorgung einer elektrischen Last, bevorzugt einer induktiven Last wie einem Antriebsmotor, dient. Der Energiewandler weist einen Brückenzweig, auch als Halbbrücke oder Haupt-Halbbrücke bezeichnet, einer an sich bekannten Brückenschaltung mit einem oberen, ansteuerbaren elektronischen ersten Hauptschalter T1 und einem unteren, ansteuerbaren elektronischen zweiten Hauptschalter T2 auf. Die Hauptschalter T1 und T2 können in an sich bekannter Weise durch elektronische Halbleiterschalter wie IGBT, Power-MOSFET, Leistungstransistoren oder GTO-Transistoren verwirklicht werden.

Der obere Hauptschalter T1 ist einerseits mit einem Spannungsausgang 2 und andererseits mit einem Versorgungsspannungsanschluss 3 verbunden, um eine Versorgungsspannung $U_{ZK}$, auch Zwischenkreisspannung genannt, an den Spannungsausgang 2 anlegen zu können. Die am Spannungsausgang 2 anliegende Spannung wird Ausgangsspannung $U_{Out}$ genannt und ist auf ein an einem Bezugspotentialanschluss 4 anliegendes Bezugspotential *GND* bezogen. Der untere zweite Hauptschalter T2 dient dazu, den Spannungsausgang 2 mit dem Bezugspotentialanschluss 4 zu verbinden und somit die Ausgangsspannung $U_{Out}$ auf Bezugspotential *GND* zu legen.

Das Bezugspotential ist hier zu 0 V gewählt, der Bezugspotentialanschluss 4 wird deshalb im weiteren auch als Masseanschluss 4 bezeichnet. Grundsätzlich wäre auch ein anderer Wert für das Bezugspotential *GND* möglich, z.B. negative Versorgungsspannung $U_{ZK}$.

Die in Fig. 1 gezeigten Hauptschalter T1 und T2 weisen jeweils integrierte Freilaufdioden F1 bzw. F2 auf, welche ihre Durchlassrichtung gegen die Durchlassrichtung der Hauptschalter T1 und T2 haben. Freilaufdiode F1 ist also vom Spannungsausgang 2 zum Versorgungsspannungsanschluss 3 und Freilaufdiode F2 vom Masseanschluss 4 zum Spannungsausgang 2 hin gepolt. Anstelle der integrierten Freilaufdioden F1, F2 können auch extern anschließbare Freilaufdioden verwendet werden.

Weiter sind Umschwingkapazitäten C1 und C2 parallel zu den Hauptschaltern T1 bzw. T2 zwischen Versorgungsspannungsanschluss 3 und Spannungsausgang 2 bzw. Spannungsausgang 2 und Masseanschluss 4 geschaltet.

Weiter ist zwischen dem Spannungsausgang 2 und Steuerausgang 5 der Kommutierungsschaltung 1 bzw. einem Steuereingang 5' eine Umschwinginduktivität $L_{RES}$ gezeigt. Diese Darstellung als konzentrierte Umschwinginduktivität $L_{RES}$ erfolgt aus Gründen der besseren Verständlichkeit und einfacheren Erläuterung der Erfindung. Die schaltungstechnische Realisierung wird später noch detailliert erläutert

Die Kommutierungsschaltung 1 ist mit einem Versorgungsanschluss 6 mit dem Versorgungsspannunganschluss 3 und mit einem Potentialanschluss 7 mit dem Masseanschluss 4 verbunden.

Wie später noch detailliert erläutert werden wird, kann bei der in Fig. 6,7, 8, 13, 16, 17 und in Fig. 20 gezeigten Ausführung der Kommutierungsschaltung 1 auch zusätzlich eine externe Hilfsspannungsquelle 8 mit einer Hilfsspannung $U_{Aux}$ verwendet werden, welche in Fig. 1 gestrichelt eingezeichnet ist. Die Hilfsspannungsquelle 8 wird dann über Hilfsanschlüsse 6' und 7' mit der Kommutierungsschaltung 1 verbunden.

Die Umschwinginduktivität $L_{RES}$ bildet zusammen mit den Umschwingkapazitäten C1 und C2 einen an sich bekannten LC-Umschwingkreis für ein sanftes Einschalten der Hauptschalter T1, T2. Für einen resonanten Umschwingvorgang, während dem die Hauptschalter T1 und T2 geöffnet sind, stellt die Kommutierungsschaltung 1 hierfür eine Steuerspannung $U_{BASE,RES}$ zwischen dem Steuerausgang 5 und dem Masseanschluss 4, also zwischen der Umschwinginduktivität $L_{RES}$ und zweiter Umschwingkapazität C2, bereit. Grundsätzlich kann anstelle der zwei Umschwingkapazitäten C1, C2 auch nur eine gemeinsame Umschwingkapazität C1 oder C2 verwendet werden.

Im Gegensatz zu einer bekannten PWM-Ansteuerung der Halbbrücke in Fig. 1, bei der jeweils ein Hauptschalter geschlossen und der andere Hauptschalter geöffnet wären, wird bei einer bekannten sanft schaltenden Halbbrücke ein resonanter Umschwingvorgang zwischen Öffnen des leitenden Hauptschalters und Schließen des nichtleitenden Hauptschalters eingefügt, wie beispielhaft in Fig. 2 und 3 gezeigt.

Hier und im nachfolgenden wird stets davon ausgegangen, dass zwischen Spannungsausgang 2 und Bezugspotential 4 eine induktive Last, z.B. ein elektrischer Motor geschaltet ist.

Bei dem in Fig. 2 und 3 schematisch dargestellten Abschwingvorgang wird die Ausgangsspannung $U_{Out}$ von Versorgungsspannung $U_{ZK}$ (=Startpotential) auf Bezugspotential *GND* (=Zielpotential) geschaltet. Während des Abschwingvorgangs wird der in Fig. 1 gezeigte LC-Umschwingkreis durch eine herkömmliche Steuerspannung $U_{BASE,RES}$ mit Amplitude von $U_{ZK}/2$ angeregt (ohne erfindungsgemäße Kommutierungsschaltung). Während des Abschwingvorgangs sind die Hauptschalter T1 T2 geöffnet, so dass die Ausgangsspannung $U_{Out}$ im wesentlichen durch den LC-Umschwingkreis bestimmt wird. Bei dem in Fig. 2 gezeigten idealen Abschwingvorgang ohne parasitäre Widerstände schwingt die Ausgangsspannung $U_{Out}$ von der Versorgungsspannung $U_{ZK}$, hier 400 Volt, in einer Halbperiode auf Bezugspotential *GND*, hier 0 Volt.

Aufgrund der tatsächlich vorhandenen parasitären Widerstände des LC-Umschwingkreises wird die Ausgangsspannung $U_{Out}$ jedoch bedämpft, so dass sie bei Anlegen der halben Versorgungsspannung $U_{ZK}/2$ als Steuerspannung $U_{BASE,RES}$ das Bezugspotential *GND* von 0 Volt nicht erreicht, wie in Fig. 3 deutlich zu sehen. Der Hauptschalter T2 wird somit zu diesem Zeitpunkt nicht spannungslos eingeschaltet, so dass sich nach wie vor einschaltbedingte Leistungsverluste ergeben, welche weitgehend als Wärme abgeführt werden müssen. Hinzu kommt, dass die durch den LC-Umschwingkreis vorgegebene Ausgangsspannung $U_{Out}$ am Spannungsausgang 2 wieder in Richtung der höheren Versorgungsspannung $U_{ZK}$ zurückschwingt, wenn der Hauptschalter T2 nicht eingeschaltet wird. Um ein möglichst verlustarmes Schalten zu ermöglichen, wird deshalb der untere Scheitelpunkt der Schwingung der Ausgangsspannung $U_{Out}$ in Fig. 3 möglichst genau detektiert, um die Schaltverluste möglichst gering zu halten. Wird zu spät geschalten, erhöhen sich die Schaltverluste durch die dann wieder höhere Ausgangsspannung $U_{Out}$.

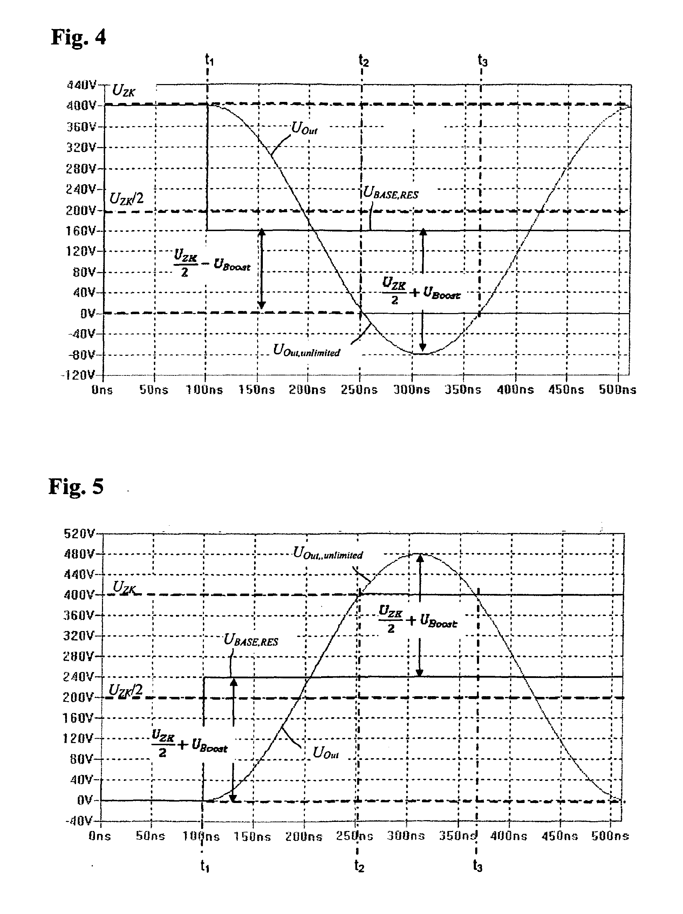

Um diesen Nachteil zu überwinden, wird erfindungsgemäß vorgeschlagen, die Steuerspannung $U_{BASE,RES}$ während des Umschwingvorgangs mit Hilfe eines Transformators auf einen Wert in Richtung des gewünschten Zielpotentials - Bezugspotential *GND* beim Abschwingvorgang (Ausschalten T1, Umschwingen, Einschalten T2) und Versorgungsspannung $U_{ZK}$ beim Aufschwingvorgang (Ausschalten T2, Umschwingen, Einschalten T1) - zu verschieben, der ein Überschwingen der Ausgangsspannung $U_{Out}$ über das Zielpotential hinaus sicherstellt. Dies wird anhand des in Fig. 4 gezeigten erfindungsgemäßen Abschwingvorgangs und des in Fig. 5 gezeigten erfindungsgemäßen Aufschwingvorgangs bei dem Energiewandler aus Fig. 1 beispielhaft erläutert.

Bei dem in Fig. 4 gezeigten Abschwingvorgang ist bis zum Zeitpunkt $t_1$ der Hauptschalter T1 geschlossen und der Hauptschalter T2 geöffnet, so dass die Versorgungsspannung $U_{ZK}$ am Spannungsausgang 2 anliegt.

Zum Zeitpunkt $t_1$ wird der Hauptschalter T1 geöffnet, während der Hauptschalter T2 geöffnet bleibt, und an den Steuerausgang 5 eine um die Spannung $U_{Boost}$ verringerte halbe Versorgungsspannung $U_{ZK} / 2,$ also die Steuerspannung $U_{BASE,RES}$, geschaltet. Die Steuerspannung $U_{BASE,RES}$ bildet gleichzeitig die Nulllinie der sinusförmig schwingenden Ausgangsspannung $U_{Out}$, deren Amplitude dann $U_{ZK} / 2 + U_{Boost}$ beträgt. Hierdurch wird das gewünschte Zielpotential *GND* sicher im Zeitpunkt $t_2$ erreicht. Grundsätzlich würde die durch den LC-Umschwingkreis erzeugte Ausgangsspannung $U_{Out}$ am Spannungsausgang 2 unvermindert weiterschwingen, was durch die unbegrenzte Umschwingspannung $U_{Out,unlimited}$ angedeutet ist. Wird die Ausgangsspannung $U_{Out}$ jedoch gegenüber Bezugspotential *GND* negativ, so beginnt die Freilaufdiode F2 des unteren Hauptschalters T2 zu leiten, so dass die Ausgangsspannung $U_{Out}$ ab Zeitpunkt $t_2$ zu Null wird. Ab Zeitpunkt $t_2$ bis zum Zeitpunkt $t_3$, zu dem die Umschwingspannung $U_{Out,unlimited}$ wieder größer als das Bezugspotential *GND* wird, ist es dann möglich, den Hauptschalter T2 spannungslos einzuschalten.

Dies hat den Vorteil, dass der Hauptschalter T2 nicht zu einem möglichst genau bestimmten Zeitpunkt $t_2$ eingeschaltet werden muss. Vielmehr ergibt sich hierdurch ein relativ langes Zeitfenster $t_3 - t_2$, während dem der Hauptschalter T2 spannungsfrei eingeschaltet werden kann, so dass keine aufwendige Detektion oder Bestimmung eines exakten, eng begrenzten Einschaltzeitpunkts nötig ist.

Der in Fig. 5 gezeigte Aufschwingvorgang verläuft analog zum Abschwingvorgang nach Fig. 4 mit dem Unterschied, dass bis zum Zeitpunkt $t_1$ der obere Hauptschalter T1 ausgeschaltet und der untere Hauptschalter T2 eingeschaltet ist. Somit liegt der Spannungsausgang 2 auf Bezugspotential *GND,* die Ausgangsspannung $U_{Out}$ ist null. Zum Zeitpunkt $t_1$ wird dann der untere Hauptschalter T2 geöffnet, und gleichzeitig die Spannung $U_{BASE,RES}$ auf $U_{ZK} / 2 + U_{Boost}$ gelegt. Bewirkt durch den LC-Umschwingkreis nimmt nun die Ausgangsspannung $U_{Out}$ mit einer sinusförmigen LC-Schwingung zu, bis zum Zeitpunkt $t_2$ die Ausgangsspannung $U_{Out}$ den Wert der Versorgungsspannung $U_{ZK}$ überschreitet. Zu diesem Zeitpunkt wird die Freilaufdiode F1 des oberen Hauptschalters T1 leitend, so dass der Spannungsausgang 2 auf Versorgungsspannung $U_{ZK}$

gelegt wird. Grundsätzlich leitet die Freilaufdiode F1 bis zum Zeitpunkt $t_3$, an dem die Umschwingspannung $U_{Out,unlimited}$ wieder unter die Versorgungsspannung $U_{ZK}$ fällt. Der Zeitraum zwischen $t_2$ und $t_3$ stellt somit das zum spannungslosen Einschalten des oberen Hauptschalters T1 vorhandene Zeitfenster dar, so dass auch beim Aufschwingvorgang der Einschaltzeitpunkt des oberen Hauptschalters T1 in einem großen Zeitraum frei gewählt werden kann.

Nachfolgend werden unterschiedliche Ausführungen der Kommutierungsschaltung 1 aus Fig. 1 beschrieben, welche die Steuerspannung $U_{BASE,RES}$ am Steuereingang 5' des LC-Schwingkreis bereitstellen.

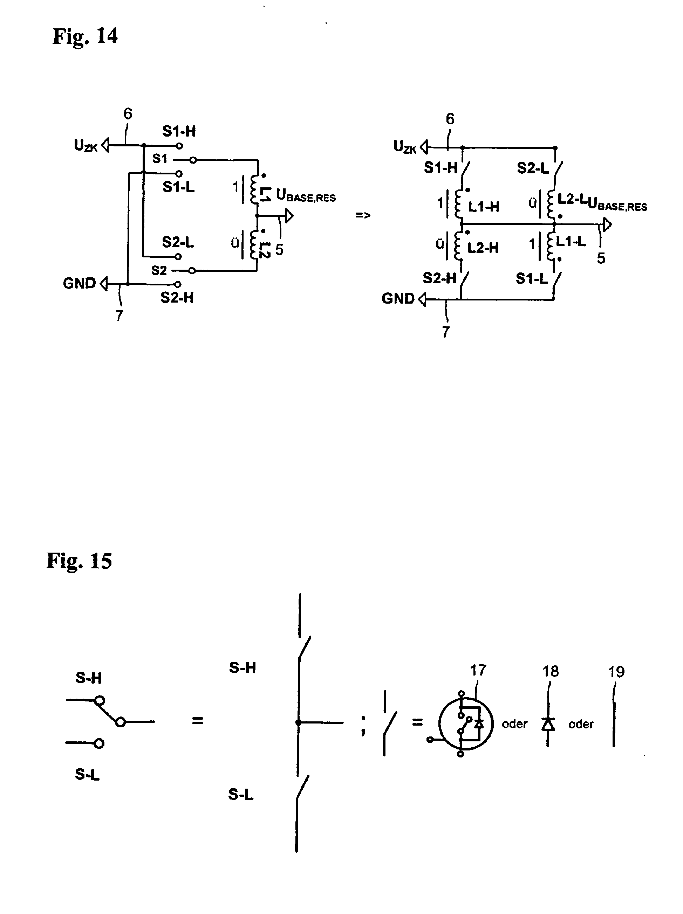

Fig. 6 zeigt ein Blockschaltbild einer ersten Ausführung der Kommutierungsschaltung 1 mit Verbindungsstellungen für den Aufschwingvorgang nach Fig. 5. Die Kommutierungsschaltung 1 weist einen Transformator mit erster und zweiter Wicklungsinduktivität L1 bzw. L2, im weiteren auch nur als Wicklungen L1 und L2 bezeichnet, auf. Das Wicklungsverhältnis der Wicklungen L1 zu L2 beträgt 1:*ü*, eine an L1 anliegende Spannung wird demnach auf das *ü*-fache an der Wicklung L2 hochtransformiert. Die Wicklung L1 ist mit einem ihrer Anschlüsse mit dem Steuerausgang 5 und mit ihrem anderen Anschluss 9 mit einem Verbindungselement S1 mit Teilverbindungselementen S1-H und S1-L verbunden. Die Bezeichnung Teilverbindungselement wird dabei als verallgemeinerte Bezeichnung für Verbindungsmöglichkeiten verwendet, deren Realisierung mit unterschiedlichen elektrischen oder elektronischen Bauteilen in Fig. 15 gezeigt ist.

Über das Teilverbindungselement S1-H kann die Wicklung L1 mit dem Versorgungsspannungsanschluss 3 verbunden und somit an die Versorgungsspannung $U_{ZK}$ gelegt werden, wobei der Buchstabe "H" hier und im nachfolgenden für einen auch als High-Swing bezeichneten Aufschwingvorgang von Bezugspotential *GND* auf Versorgungsspannung $U_{ZK}$ verwendet wird. Mittels des anderen Teilverbindungselements S1-L kann die Wicklung L1 mit dem Masseanschluss 4 verbunden und somit auf Bezugspotential *GND* gelegt werden, wobei der Buchstabe "L" hier und im nachfolgenden für einen auch als Low-Swing bezeichneten Abschwingvorgang von Versorgungsspannung $U_{ZK}$ auf Bezugspotential *GND* verwendet wird.

Die zweite Wicklung L2 ist mit einem in Fig. 6 oberen Anschluss 10, welcher vom Wicklungssinn dem Anschluss 9 der Wicklung L1 entspricht, mit einem Verbindungselement S2 verbunden. Der Wicklungssinn der Wicklungen L1, L2 ist in üblicher Weise durch einen Punkt am jeweiligen Wicklungsanfang gekennzeichnet. Die erste und zweite Wicklung L1, L2 können jedoch auch in umgekehrter Polung angeschlossen werden. Maßgeblich für die Funktion der vorliegenden wie auch der nachfolgenden Kommutierungsschaltungen 1 ist, dass zueinander gehörige Wicklungen der Kommutierungsschaltungen 1 gemeinsam umgepolt werden, so dass die Polung der in beiden Wicklungen induzierten Spannungen nicht umgekehrt wird.

Das Verbindungselement S2 umfasst wie das Verbindungselement S1 ein Teilverbindungselement S2-H, mit dem der Anschluss 10 der Wicklung L2 mit dem Spannungsversorgungsanschluss 3 verbunden und somit an die Versorgungsspannung $U_{ZK}$ gelegt werden kann, sowie ein Teilverbindungselement S2-L, mit dem der Anschluss 10 mit dem Masseanschluss 4 verbunden und somit auf das Bezugspotential *GND* gelegt werden kann. In analoger Weise kann der andere Anschluss 11 der Wicklung L2 über ein Verbindungselement S3 mittels eines Teilverbindungselements S3-H mit dem Masseanschluss 4 verbunden und somit auf Bezugspotential *GND* gelegt werden, oder mittels eines Teilverbindungselements S3-L mit dem Versorgungsspannungsanschluss 3 verbunden und somit an Versorgungsspannung $U_{ZK}$ gelegt werden.

Die Teilverbindungselemente S1-H, S2-H und S3-H erlauben es, die Wicklungen L1 und L2 so zu schalten, dass am Steuerausgang 5 die für einen erfindungsgemäßen Aufschwingvorgang notwendige Steuerspannung $U_{BASE,RES}$, welche um den Spannungswert $U_{Boost}$ höher ist als die halbe Versorgungsspannung $U_{ZK}$ / 2, erzeugt wird. Da die Teilverbindungselemente S1-H, S2-H und S3-H bzw. die Teilverbindungselemente S1-L, S2-L und S3-L synchron geschaltet werden, wird nachfolgend auch von den Teilverbindungselemente SX-H bzw. SX-L gesprochen, wobei X durch 1, 2 und 3 zu ersetzen ist.

Um während des Aufschwingvorgangs die Spannung $U_{BASE,RES}$ auf den gewünschten Wert höher als $U_{ZK}$ / 2 zu setzen, werden die Teilverbindungselemente SX-H zu Beginn des Aufschwingvorgangs in die in Fig. 6 gezeigte H-Stellungen geschaltet. Dann liegt an der Wicklung L2 die Versorgungsspannung $U_{ZK}$ an, und die erste Wicklung L1 ist mit dem Versorgungsspannungsanschluss $U_{ZK}$ verbunden. An der ersten Wicklung L1 wird aufgrund der an der zweiten Wicklung L2 anliegenden Versorgungsspannung $U_{ZK}$ die mit dem Übertragungsverhältnis $ü$ umgerechnete Wicklungsspannung $U_{L1} = U_{ZK}$ / $ü$ erzeugt. Die Steuerspannung $U_{BASE,RES}$ ergibt sich zu $U_{ZK}$ abzüglich der Wicklungsspannung $U_{L1}$ wie folgt:

$$U_{BASE,RES} = U_{ZK} - \frac{U_{ZK}}{ü} = \frac{U_{ZK}}{2} + U_{Boost}$$

Für einen Abschwingvorgang nach Fig. 7 werden die Teilverbindungselemente SX-L geschlossen und somit die erste Wicklung L1 mit dem Masseanschluss 4 verbunden und somit auf Bezugspotential *GND* gelegt. Gleichermaßen wird die zweite Wicklung L2 mit umgekehrter Polung wie in Fig. 6 an den Versorgungsspannungsanschluss 3 und somit an die Versorgungsspannung $U_{ZK}$ gelegt. Hierdurch ergibt sich die Steuerspannung $U_{BASE,RES}$ am Steuerausgang 5 zu

$$U_{BASE,RES} = \frac{U_{ZK}}{ü} = \frac{U_{ZK}}{2} - U_{Boost}$$

also eine um $U_{Boost}$ verringerte halbe Versorgungsspannung $U_{ZK}$ / 2. Die durch die Kommutierungsschaltung 1 nach Fig. 6 bzw. 7 zusätzlich zu $U_{ZK}$ / 2 bereitgestellte Spannung $U_{Boost}$ ergibt sich in beiden Fällen zu:

$$U_{Boost} = U_{ZK} \cdot \frac{ü - 2}{2ü}$$

Der Wicklungsfaktor $ü$ ergibt sich für $U_{Boost} = k \ U_{ZK}$ mit $0 < k < 0,5$ zu

$$ü = \frac{2}{1 - 2k}$$

so dass sich ein Wicklungsverhältnis 1:$ü$ zwischen erster Wicklung L1 und zweiter Wicklung L2 mit $0 < 1/ü < 0,5$ ergibt.

Bei der in Fig. 6 und 7 gezeigten Kommutierungsschaltung 1 kann die zweite Wicklung L2 anstelle von der Versorgungsspannung $U_{ZK}$ auch durch eine andere Spannungsquelle versorgt werden, z.B. durch die in Fig. 1 gezeigte Hilfsspannungsquelle 8. Die in Fig. 6 und 7 gezeigte gestrichelte Verbindung kann dann weggelassen werden. Das Übersetzungsverhältnis zwischen L1 und L2 muss entsprechend angepasst werden.

Die durch die Kommutierungsschaltung 1 nach Fig. 6 bzw. 7 mit einer Hilfsspannungsquelle 8 zur Spannungsversorgung der zweiten Wicklung L2 mit einer Hilfsspannung $U_{AUX}$ anstelle von $U_{ZK}$ zusätzlich zu $U_{ZK}$ / 2 bereitgestellte Spannung $U_{Boost}$ ergibt sich in beiden Fällen zu:

$$U_{Boost} = U_{ZK} \cdot \frac{ü - 2\dfrac{U_{AUX}}{U_{ZK}}}{2ü}$$

Der Wicklungsfaktor ü ergibt sich für $U_{Boost} = k \ U_{ZK}$ mit $0 < k < 0,5$ zu

$$\ddot{u} = \frac{2\dfrac{U_{AUX}}{U_{ZK}}}{1-2k}$$

so dass sich ein Wicklungsverhältnis 1:$\ddot{u}$ zwischen erster Wicklung L1 und zweiter Wicklung L2 mit 0 < 1/$\ddot{u}$ < 0,5 $U_{ZK}$/$U_{AUX}$ ergibt.

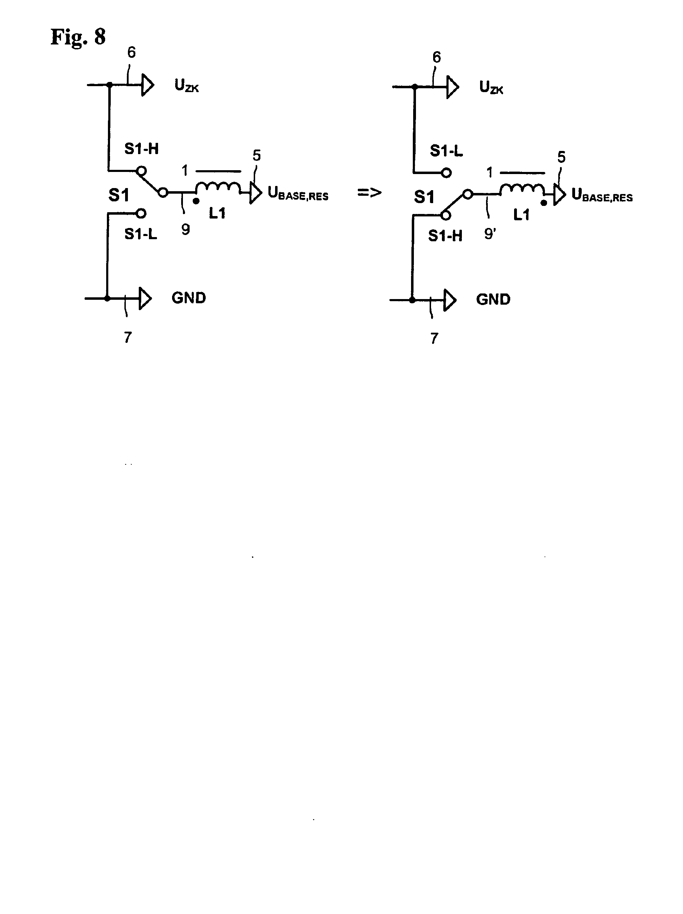

Fig. 8 zeigt eine alternative Verschaltung der ersten Wicklung L1 und des Teilverbindungselements S1, mit der die gewünschte Steuerspannung $U_{BASE,RES}$ bereitgestellt werden kann. Hierbei wird der aus Fig. 6 und 7 bekannte, in Fig. 8 links gezeigte Schaltungsteil wie in Fig. 8 rechts gezeigt abgeändert. Zum einen werden die Teilverbindungselemente S1-L und S1-H vertauscht, zum anderen der Wicklungssinn der Wicklung L1 umgekehrt.

Für den Aufschwingvorgang mit der in Fig. 6 gezeigten Verbindungsstellung für die Verbindungselemente S2 und S3 wird das Teilverbindungselement S1-H in Fig. 8 rechts anstelle auf Versorgungsspannung $U_{ZK}$ auf Bezugspotential *GND* gelegt, so dass sich die Steuerspannung $U_{BASE,RES}$ zu $U_{ZK}$ / $\ddot{u}$ einstellt. Dazu muss das Wicklungsverhältnis 1:$\ddot{u}$ so gewählt sein, dass in diesem Fall die Steuerspannung $U_{BASE,RES}$ höher ist als $U_{ZK}$ / 2.

Beim Abschwingvorgang wird das Teilverbindungselement S1-L geschlossen, das Teilverbindungselement S1-H ist somit geöffnet. Da gemäß Fig. 7 die negative Versorgungsspannung $U_{ZK}$ an L2 angelegt ist und die Wicklung L1 an den Versorgungsspannungsanschluss 3 angeschlossen ist und somit an Versorgungsspannung $U_{ZK}$ liegt, wird die Steuerspannung $U_{BASE,RES}$ um die Spannung $U_{ZK}$/ $\ddot{u}$, welche um den Betrag $U_{Boost}$ größer ist als $U_{ZK}$ / 2, verringert, so dass die Steuerspannung $U_{BASE,RES}$ niedriger ist als $U_{ZK}$ / 2.

Die durch die Kommutierungsschaltung 1 nach Fig. 8 zu $U_{ZK}$ / 2 bereitgestellte Spannung $U_{Boost}$ ergibt sich in beiden Fällen zu:

$$U_{Boost} = U_{ZK} \cdot \frac{2-\ddot{u}}{2\ddot{u}}$$

Der Wicklungsfaktor ü ergibt sich für $U_{Boost} = k$ $U_{ZK}$ mit 0 < k < 0,5 zu

$$\ddot{u} = \frac{2}{1+2k}$$

so dass sich ein Wicklungsverhältnis 1:$\ddot{u}$ zwischen erster Wicklung L1 und zweiter Wicklung L2 mit 0,5 < 1/$\ddot{u}$ < 1 ergibt.

Eine alternative Ausführung der erfindungsgemäßen Kommutierungsschaltung 1 mit Verbindungsstellungen für Aufschwingvorgang bzw. Abschwingvorgang zeigen Fig. 9 bzw. 10.

Bei der in Fig. 9 gezeigten Kommutierungsschaltung 1 ist der Steuerausgang 5 mit Anschlüssen 13 bzw. 14 von Wicklungen L1 und L2 eines Transformators verbunden, welche auf einem gemeinsamen Kern gegensinnig gewickelt sind. Das andere Ende 15 der Wicklung L1 kann über ein Verbindungselement S1 mit dessen Teilverbindungselement S1-H mit dem Versorgungsspannungsanschluss 3 und somit Versorgungsspannung $U_{ZK}$ verbunden werden, während es alternativ über ein Teilverbindungselement S1-L mit Bezugspotential *GND* verbunden werden kann. Analog kann der andere Ausgang 16 der Wicklung L2 über ein Verbindungselement S2 mit Versorgungsspannungsanschluss 3, also Versorgungsspannung $U_{ZK}$, oder mit Masseanschluss 4 und somit Bezugspotential *GND* verbunden werden, und zwar einerseits über Teilverbindungselement S2-L mit Versorgungsspannung $U_{ZK}$ und andererseits mit Teilverbindungselement S2-H mit Bezugspotential *GND*. Auch hier bezeichnen die Buchstaben "H" bzw. "L" die Teilverbindungselemente für einen Aufschwing- bzw. Abschwingvorgang (<u>H</u>igh- bzw. <u>L</u>ow-Swing).

Die Steuerspannung $U_{BASE,RES}$ ergibt sich dann aus dem an sich bekannten induktiven Spannungsteiler aus Wicklungen L1 und L2 in der in Fig. 9 gezeigten Verbindungsstellung für den Aufschwingvorgang und positiver Versorgungsspannung $U_{ZK}$ an den Anschlüssen 15, 16 der Wicklungen L1 und L2 zu:

$$U_{BASE,RES} = U_{ZK} \cdot \frac{\ddot{u}}{1+\ddot{u}} = \frac{U_{ZK}}{2} + U_{Boost}$$

Im Gegensatz dazu wird für einen Abschwingvorgang die negative Versorgungsspannung $U_{ZK}$ über Teilverbindungselemente S1-L und S2-L an die Anschlüsse 15, 16 der Wicklungen L1, L2 gelegt, so dass sich die Steuerspannung $U_{BASE,RES}$ ergibt zu:

$$U_{BASE,RES} = U_{ZK} \cdot \frac{1}{1+\ddot{u}} = \frac{U_{ZK}}{2} - U_{Boost}$$

Die durch die Kommutierungsschaltung 1 nach Fig. 9 bzw. 10 zusätzlich zu $U_{ZK}$ / 2 bereitgestellte Spannung $U_{Boost}$ ergibt sich in beiden Fällen zu:

$$U_{Boost} = U_{ZK} \cdot \frac{\ddot{u}-1}{2(\ddot{u}+1)}$$

Der Wicklungsfaktor ü ergibt sich für $U_{Boost} = k \, U_{ZK}$ mit $0 < k < 0,5$ zu

$$\ddot{u} = \frac{1 + 2k}{1 - 2k}$$

so dass sich ein Wicklungsverhältnis 1:ü zwischen erster Wicklung L1 und zweiter Wicklung L2 mit $0 < 1/\ddot{u} < 1$ ergibt.

Fig. 11 zeigt eine weitere Variante, bei der die in Fig. 11 links gezeigte Wicklung L1 durch zwei gleichsinnig auf einem gemeinsamen Kern eines Transformators gewickelte Teilwicklungen L1-H und L1-L ersetzt wird. Die Teilwicklungen L1-H, L1-L sind einerseits mit dem Steuerausgang 5 verbunden, während andererseits die Wicklung L1-H mit dem Teilverbindungselement S1-H und die Wicklung L1-L mit dem Teilverbindungselement S1-L verbunden ist. Auch hier bezeichnen die Anhänge "-H" bzw. "-L" die Wicklungen bzw.

Teilverbindungselemente für den Aufschwing- bzw. den Abschwingvorgang. Diese "elektrische" Entkopplung des Schalters S1 mit der Aufteilung der Wicklung L1 könnte auch bei der zweiten Wicklung L2 eingesetzt werden, wobei hierdurch dann eines der Verbindungselemente S2 oder S3 in zwei Teilverbindungselemente aufgeteilt würde.

Eine weitere Variante einer "elektrischen" Entkopplung der Verbindungselemente S2 und S3 zeigt Fig. 12, wo die zu ersetzende Wicklung L2 auf beiden Seiten mit Verbindungselementen S2 und S3 verbunden ist. Wieder wird die Induktivität L2 durch zwei auf einem gemeinsamen Kern gewickelte Teilwicklungen L2-H und L2-L ersetzt. Die Teilwicklung L2-H wird hierbei beidseitig mit Teilverbindungselementen SX-H verbunden, während die Teilwicklung L2-H beidseitig mit den Teilverbindungselementen SX-L verbunden wird.

Alternativ zur "elektrischen" Entkopplung kann auch eine "magnetische" Entkopplung der Wicklungen L1, L2 durchgeführt werden. Dafür werden die Wicklungen L1, L2 zunächst wie in Fig. 11 und Fig. 12 elektrisch entkoppelt. Zusätzlich werden jene Wicklungen, die für den Aufschwingvorgang zuständig sind (L1-H und L2-H), auf einen gemeinsamen Transformatorkern gewickelt, während die für den Abschwingvorgang zuständigen Wicklungen L1-L und L2-L auf einen zweiten Transformatorkern gewickelt werden.

Fig. 13 zeigt ein Blockschaltbild einer Ausführung der Kommutierungsschaltung aus Fig. 6 und 7, bei der die magnetische Entkopplung angewendet wurde. So wurden das erste Verbindungselement S1 und die erste Wicklung L1 gemäß Fig. 11 in zwei Teilverbindungselemente S1-H und S1-L und zwei Spulen L1-H und L1-L aufgeteilt. Die zweite Wicklung L2 wurde gemäß Fig. 12 in zwei Wicklungen L2-H und L2-L aufgeteilt. Die Wicklungen L1-H und L2-H bilden einen Transformator für den Aufschwingvorgang, bei dem die Teilverbindungselemente SX-H eingeschaltet und die Teilverbindungselemente SX-L ausgeschaltet sind. Für den Abschwingvorgang bilden die Wicklungen L1-L und L2-L einen zweiten Transformator, wobei dann die Teilverbindungselemente SX-L eingeschaltet und die Teilverbindungselemente SX-H ausgeschaltet sind.

Durch die in Fig. 13 rechts gezeigte Kommutierungsschaltung 1 mit zwei Transformatoren mit der dort gezeigten Einstellung der Wicklungsverhältnis beider Transformatoren und der jeweiligen Polung der Wicklungen wird auf einfache Weise sichergestellt, dass die Steuerspannung $U_{BASE,RES}$ beim Aufschwingvorgang in Richtung der höheren Zielspannung $U_{ZK}$ und beim Abschwingvorgang in Richtung der niedrigeren Zielspannung GND verschoben wird.

In Fig. 14 ist eine "magnetische" Entkopplung der Verbindungselemente S1 und S2 aus Fig. 9 und 10 dargestellt. Hierbei wird die in Fig. 14 links gezeigte Kommutierungsschaltung 1 aus Fig. 9 und 10 durch die in Fig. 14 rechts gezeigte Alternative ersetzt. Bei dieser werden die Wicklungen L1, L2 in jeweils zwei Teilwicklungen L1-H, L2-H und L2-L, L1-L aufgeteilt. Dabei sind die Teilwicklungen L1-H und L2-H, welche beim Aufschwingvorgang wirken, auf einen Transformatorkern gewickelt und L1-L und L2-L welche beim Abschwingvorgang wirken, auf einen zweiten Transformatorkern.

Durch die in Fig. 14 rechts gezeigte Kommutierungsschaltung 1 mit zwei Transformatoren mit der dort gezeigten Einstellung der Wicklungsverhältnis beider Transformatoren wird auf einfache Weise sichergestellt, dass die Steuerspannung $U_{BASE,RES}$ beim Aufschwingvorgang in Richtung der höheren Zielspannung $U_{ZK}$ und beim Abschwingvorgang in Richtung der niedrigeren Zielspannung GND verschoben wird.

In Fig. 15 ist eine Realisierung der in Fig. 6 bis 14, 20 und 22 gezeigten Verbindungselemente S1 bis S3 anhand eines allgemeinen Verbindungselements veranschaulicht. Dessen Teilverbindungselemente S-H, S-L können durch schaltende Halbleiterbauelemente 17 wie Thyristoren, GTO, IGBT, Power-MOSFET, Leistungstransistoren etc. mit integrierter oder zusätzlich angeschlossener antiparalleler Freilaufdiode oder durch Dioden 18, wie in Fig. 15 rechts gezeigt, realisiert werden. Bei einer magnetischen Entkopplung wie in Fig. 13 kann ein Teilverbindungselement auch durch eine feste Verbindung ersetzt werden. Es ist nicht möglich, diese Elemente beliebig zu kombinieren. Maßgeblich ist vielmehr, dass mindestens zwei ansteuerbare Halbleiterschalter für die Aktivierung des Abschwing- bzw. Aufschwingvorgangs benötigt werden.

So kann bei der in Fig. 6 gezeigten Kommutierungsschaltung 1 das Verbindungselement S1 für die Induktivität L1 durch die Schalt-Halbbrücke 17 mit Rücklaufdiode und Polung wie in Fig. 15 gezeigt, ersetzt werden. Die Verbindungselemente S2 und S3 werden durch Dioden-Halbbrücken 18 aus Fig. 15 mit der dort gezeigten Polung ersetzt, so dass die Wicklung L2 in einer B4-Diodenbrücke angeordnet ist.

Eine schaltungstechnische Realisierung dieser Kommutierungsschaltung 1 zeigt Fig. 16. Dort sind die Teilverbindungselemente S1-H und S1-L gemäß Fig. 15 durch schaltende Halbleiterbauelemente 17 mit integrierter antiparalleler Freilaufdiode verwirklicht, während die Teilverbindungselemente S2-H, S3-H und S2-L, S3-L durch Dioden 18 verwirklicht sind. Beim Aufschwingvorgang wird S1-H angesteuert und geschlossen (S1-L geöffnet), so dass die erste Wicklung L1 an die Versorgungsspannung $U_{ZK}$ gelegt wird. Der zum Spannungsausgang 2 durch L1 fließende Strom bei induktiver Last am Spannungsausgang 2 erzeugt in der zweiten Wicklung L2 einen Stromfluss von Diode S3-H in Richtung Diode S2-H, so dass diese leitend werden. Hierdurch wird die Versorgungsspannung $U_{ZK}$ positiv an L2 gelegt, so dass aufgrund des wie oben vorgegebenen Wicklungsverhältnisses ü die Steuerspannung $U_{BASE,RES}$ in Richtung Versorgungsspannung $U_{ZK}$ angehoben wird.

Beim Abschwingvorgang hingegen wird Halbleiterschalter S1-L geschlossen (S1-H geöffnet) und somit die erste Wicklung L1 auf Bezugspotential *GND* gelegt. Nun fließt ein Strom vom Spannungsausgang 2 durch L1, wodurch in der zweiten Wicklung L2 ein Stromfluss von Diode S2-L in Richtung Diode S3-L fließt, so dass diese leitend werden. Hierdurch wird die Versorgungsspannung $U_{ZK}$ negativ an L2 gelegt, so dass aufgrund des wie oben vorgegebenen Wicklungsverhältnisses ü die Steuerspannung $U_{BASE,RES}$ in Richtung Bezugspotential verschoben wird.

In einer alternativen Ausführung von Fig. 6 und 7 nach der Variante aus Fig. 8 kann anstelle des Verbindungselements S1 in Fig. 6 eine Halbbrücke aus Dioden 18 wie in Fig. 15 gepolt verwendet werden, während die Wicklung L2 über zwei Halbbrücken aus Halbleiterschaltern 17 mit Freilaufdiode wie in Fig. 15 gepolt verbunden werden, welche die Verbindungselemente S2 und S3 ersetzen. Die Freilaufdioden der Halbleiterschalter 17 sind dabei mit Durchlassrichtung vom Bezugspotential *GND* in Richtung Versorgungsspannung $U_{ZK}$ zu polen.

Eine weitere schaltungstechnische Realisierung der Kommutierungsschaltung 1 aus Fig. 6 zeigt Fig. 17, welche der nach Fig. 8 und Fig. 13 entspricht. In Fig. 17 sind lediglich die Teilverbindungselemente S1-H und S1-L durch Dioden 18, die Teilverbindungselemente S2-H und S3-L durch leitende Verbindungen und die Teilverbindungselemente S2-L und S3-H durch Halbleiterschalter 17 mit antiparalleler Freilaufdiode wie in Fig. 15 gepolt ersetzt. Ansonsten funktioniert die Kommutierungsschaltung 1 nach Fig. 17 wie die in Fig. 13 beschriebene mit der Änderung nach Fig. 8. Auch hier bilden die Wicklungen L1-H und L2-H einen ersten Transformator für den Aufschwingvorgang und die Wicklungen L1-L und L2-L einen zweiten Transformator für den Abschwingvorgang. Durch Einschalten der Teilverbindungselemente S3-H bzw. S2-L wird dann der Auf- bzw. Abschwingvorgang ausgelöst.

Wie bereits zur Kommutierungsschaltung aus Fig. 1 beschrieben, besteht grundsätzlich auch die Möglichkeit, in den oben beschriebenen drei Ausführungen der Kommutierungsschaltung 1 (Fig. 16 und 17) die Wicklung L2 anstelle an Versorgungsspannung $U_{ZK}$ an eine Hilfsspannungsquelle 8 zu legen. Hierzu würden in Fig. 16 und 17 lediglich gestrichelten Verbindungen zwischen Versorgungsspannungsquelle $U_{ZK}$ getrennt und die gestrichelten Verbindungen zur Hilfsspannungsquelle 8 geschlossen.

Eine erfindungsgemäße Ausführung der Kommutierungsschaltung 1 aus Fig. 9 kann nach

Fig. 18 ausgebildet sein und realisiert das Verbindungselement S1 bzw. dessen Teilverbindungselemente S1-H für den Aufschwingvorgang und S1-L für den Abschwingvorgang in Fig. 9 durch eine Halbbrücke aus Halbleiterschaltern 17 mit Freilaufdiode wie in Fig. 15 gepolt, während das Verbindungselement S2 bzw. dessen Teilverbindungselemente S2-H für den Aufschwingvorgang und S2-L für den Abschwingvorgang durch ein Halbbrücke aus Dioden 18 wie in Fig. 15 gepolt realisiert wird. Die Freilaufdioden des Halbleiterschalterpaars 17 wie auch die Dioden der Dioden-Halbbrücke 18 sind dabei mit Durchlassrichtung vom Bezugspotential *GND* in Richtung Versorgungsspannung $U_{ZK}$ zu polen.

Eine weitere erfindungsgemäße schaltungstechnische Realisierung der Kommutierungsschaltung 1 aus Fig. 9 zeigt Fig. 19, welche der nach Fig. 14 entspricht. In Fig. 19 sind die Teilverbindungselemente S1-H und S1-L durch Halbleiterschalter 17 mit antiparalleler Freilaufdiode und die Teilverbindungselemente S2-H und S2-L durch Dioden 18 wie in Fig. 15 gepolt ersetzt. Ansonsten funktioniert die Kommutierungsschaltung 1 nach Fig. 19 wie die in Fig. 14 beschriebene. Auch hier bilden die Wicklungen L1-H und L2-H einen ersten Transformator für den Aufschwingvorgang und die Wicklungen L1-L und L2-L einen zweiten Transformator für den Abschwingvorgang. Durch Einschalten der Teilverbindungselemente S1-H bzw. S1-L wird dann der Auf- bzw. Abschwingvorgang ausgelöst.

In den schaltungstechnischen Realisierungen aus Fig. 16 bis 19 kann die konzentriert dargestellte Umschwinginduktivität $L_{RES}$ als externes Bauteil, beispielsweise als Drosselspule, durch parasitäre Induktivitäten der Wicklungen L1, L2 bzw. L1-H, L1-L, L2-H, L2-L oder auch als Kombination daraus gebildet sein. Gleiches gilt auch für die Schaltungen nach Fig. 1, 20 und 22.

Wie aus obigen Ausführungen hervorgeht, kann die Erfindung durch eine Vielzahl von Kombinationen unterschiedlicher Verbindungselemente, Teilverbindungselemente und Wicklungen realisiert werden. Maßgeblich ist, dass die an der jeweils wirkenden ersten Wicklung des oder der Transformatoren erzeugte Steuerspannung $U_{BASE,RES}$ in Richtung der gewünschten Zielspannung "verschoben" ist, also beim Aufschwingen näher an der Versorgungsspannung *UZK* und beim Abschwingen näher am Bezugspotential *GND*. Um die Ansteuerung zu vereinfachen, wird vorteilhaft über die Freilaufdiode des Hauptschalters, der spannungsfrei eingeschaltet werden, die Umschwingspannung auf den Wert der Zielspannung begrenzt.

Anhand von Fig. 20 a) bis l) wird mittels der darin gezeigten Blockschaltbilder des erfindungsgemäßen Energiewandlers mit Kommutierungsschaltung 1 nach Fig. 6 ein vollständiger Schaltzyklus mit Aufschwingvorgang und Abschwingvorgang beschrieben. Die den Blockschaltbildern in Fig. 20 a) bis l) zugeordneten Schalttabellen geben die Zustände der Hauptschalter T1, T2 sowie der Verbindungselemente SX-H und SX-L der Kommutierungsschaltung 1 an.

Die den einzelnen Zuständen aus Fig. 20 a) bis l) zugehörigen Zeitverläufe der maßgeblichen Ströme, Spannungen und Schalterzustände sind in Fig. 21 gezeigt, wobei sich die den Zeitintervallen zugeordneten Buchstaben auf die Fig. 20 a) bis l) beziehen. Die oberste Achse in Fig. 21 zeigt den Zeitverlauf der Steuerspannung $U_{BASE,RES}$ (dicke Linie) und der Ausgangsspannung $U_{Out}$. Die zweite Achse zeigt den Zeitverlauf des (konstanten, induktiven) Laststroms $I_{Load}$ und des Umschwingstroms $I_{RES}$. Die dritte und vierte Achse zeigen die Zeitverläufe der Ströme $I_{T1}$ und $I_{T2}$ durch die Hauptschalter T1 bzw. T2. Die fünfte Achse zeigt die Zeitverläufe der Absolutwerte der Ströme $I_{S1-H}$ durch das Teilverbindungselement S1-H, die sechste Achse die Zeitverläufe der Absolutwerte der Ströme $I_{S1-L}$ durch das Teilverbindungselement S1-L. Die siebte Achse zeigt die Zeitverläufe der Ströme $I_{C1}$ - $I_{C2}$ durch die Umschwingkapazitäten C1 bzw. C2. Die achte Achse zeigt die Zeitverläufe der Schaltzustände der Hauptschalter T1 und T2 sowie der Teilverbindungselemente SX-H und SX-L.

In Fig. 20 a) ist der Hauptschalter T1 offen, also nichtleitend, während T2 geschlossen, also leitend ist. Die Teilverbindungselemente SX-H und SX-L sind offen, also nichtleitend. Der Laststrom $I_{Load}$ fließt über den Hauptschalter T2 und seine Freilaufdiode F2.

In Fig. 20 b) wird der Hauptschalter T2 geöffnet, der induktive Laststrom $I_{Load}$ wird deshalb vollständig von der Freilaufdiode F2 von Hauptschalter T2 übernommen. Die anderen Schalter T1 und die Teilverbindungselemente SX-H und SX-L bleiben unverändert geöffnet.

In Fig. 20 c) werden die Teilverbindungselemente SX-H geschlossen, das Potential am Steuerausgangs 5 bzw. Steuereingang 5' zwischen erster Wicklungsinduktivität L1 und Umschwinginduktivität L$_{RES}$ somit aufgrund der nunmehr an die Versorgungsspannung $U_{ZK}$ gelegten zweiten Wicklung L2 auf $U_{BASE,RES}$ = $U_{ZK}$ - $U_{ZK}$ / ü geschaltet. Anschließend baut sich der Strom über die Umschwinginduktivität L$_{RES}$ linear auf und übernimmt den Laststrom $I_{Load}$ von der Freilaufdiode F2 des Hauptschalters T2.

Sobald die Umschwinginduktivität L$_{RES}$ den kompletten Laststrom $I_{Load}$ übernommen hat, kann der LC-Umschwingkreis zwischen der Umschwinginduktivität L$_{RES}$ und den Umschwingkapazitäten C1, C2 frei umschwingen, wie in Fig. 20 d) gezeigt.

Sobald die Ausgangsspannung $U_{Out}$ die Versorgungsspannung $U_{ZK}$ überschreitet, liegt die daraus resultierende positive Differenzspannung in Durchlassrichtung an der Freilaufdiode F1 von Hauptschalter T1 an, welche daraufhin leitend wird (Fig. 20 e). Ein weiteres Ansteigen der Ausgangsspannung $U_{Out}$ über die Versorgungsspannung $U_{ZK}$ hinaus wird hierdurch verhindert. Der Umschwingstrom $I_{res}$ durch die Umschwinginduktivität L$_{RES}$ wird nun vollständig von der Freilaufdiode F1 von Hauptschalter T1 übernommen und linear abgebaut, da die Umschwingkapazitäten C1, C2 keinen Schwingkreis mit L$_{RES}$ und L1 mehr bilden.

Grundsätzlich könnte der Hauptschalter T1 bereits jetzt eingeschaltet werden, da er spannungslos ist. Er muss jedoch spätestens dann eingeschalten werden, wenn der Strom durch die Freilaufdiode F1 von Hauptschalter T1 auf Null abgebaut ist (Fig. 20 f). Hierdurch ergibt sich ein relativ großes Zeitfenster zum Einschalten des Hauptschalters T1. Der Umschwingstrom $I_{res}$ durch die Umschwinginduktivität L$_{RES}$ wird weiter linear abgebaut und sobald er vollständig abgebaut ist, können die Teilverbindungselemente SX-H geöffnet werden (Fig. 20 g), wobei dies nach Fig. 21 im vorliegenden Fall erst später erfolgt. Der Aufschwingvorgang ist somit beendet.

Für einen Abschwingvorgang wird nach Fig. 20 h) der Hauptschalter T1 geöffnet, der andere Hauptschalter T2 und die Teilverbindungselemente SX-H und SX-L sind nach wie vor geöffnet. Durch das Öffnen von Hauptschalter T1 wird der Laststrom $I_{Load}$ sofort von den Umschwingkapazitäten C1 C2 übernommen, welche durch den Laststrom $I_{Load}$ umgeladen werden. Hierdurch nimmt die Ausgangsspannung $U_{Out}$ linear ab.

Anschließend werden die Teilverbindungselemente SX-L geschlossen, der Steuerausgang 5 bzw. Steuereingang 5' zwischen erster Wicklung L1 und Umschwinginduktivität L$_{RES}$ aufgrund der mit umgekehrter Polung auf Versorgungsspannung $U_{ZK}$ gelegten zweiten Wicklung L2 auf $U_{BASE,RES}$ = $U_{ZK}$/ü geschaltet (Fig. 20 i). Über die Umschwinginduktivität L$_{RES}$ baut sich der Umschwingstrom $I_{res}$ auf und lädt zusätzlich zum Laststrom $I_{Load}$ die Umschwingkapazitäten C1, C2 um. Dann wird die Spannung über der Umschwinginduktivität L$_{RES}$ kleiner, bis sie ihr Vorzeichen ändert, so dass der Umschwingstrom $I_{res}$ durch die Umschwinginduktivität L$_{RES}$ wieder kleiner wird.

Wird die Ausgangsspannung $U_{Out}$ kleiner als das Bezugspotential *GND,* hier Null (Fig. 20 j), so wird die Freilaufdiode F2 des Hauptschalters T2 aufgrund der dann an ihr in Durchlassrichtung anliegenden positiven Differenzspannung leitend, so dass die Ausgangsspannung $U_{Out}$ auf Bezugspotential *GND* bleibt. Währenddessen wird der Umschwingstrom $I_{res}$ durch die Umschwinginduktivität L$_{RES}$ über die Freilaufdiode F2 des Hauptschalters T2 weiter abgebaut.

Grundsätzlich kann ab diesem Zeitpunkt der Hauptschalter T2 eingeschaltet werden und einen Teil des Laststroms $I_{Load}$ und des Umschwingstroms $I_{res}$ übernehmen, da er nun spannungslos ist (Fig. 20 k), wobei der Hauptschalter T2 hier erst später eingeschaltet wird (Fig. 21).

Ist der Umschwingstrom $I_{res}$ durch die Um-

schwinginduktivität $L_{RES}$ dann vollständig abgebaut, können die Teilverbindungselemente SX-L für den Abschwingvorgang geöffnet werden (Fig. 20l), der Abschwingvorgang ist damit beendet.

Anhand von Fig. 22 a) bis l) wird mittels der darin gezeigten Blockschaltbilder des alternativen erfindungsgemäßen Energiewandlers mit Kommutierungsschaltung 1 nach Fig. 9 ein vollständiger Schaltzyklus mit Aufschwingvorgang und Abschwingvorgang beschrieben. Die den Blockschaltbildern in Fig. 22 a) bis l) zugeordneten Schalttabellen geben die Zustände der Hauptschalter T1, T2 der Haupt-Halbbrücke sowie der Teilverbindungselemente SX-H und SX-L der Kommutierungsschaltung 1 an.

Die den einzelnen Schaltzuständen aus Fig. 22 a) bis l) zugehörigen Zeitverläufe der maßgeblichen Ströme, Spannungen und Schalterzustände sind in Fig. 23 gezeigt, wobei sich die den Zeitintervallen zugeordneten Buchstaben auf die Fig. 22 a) bis l) beziehen. Die Beschriftung der Achsen in Fig. 23 entspricht der in Fig. 21, so dass die dortigen Erläuterungen hierzu entsprechend gelten.

Der Schaltzyklus aus Fig. 22 a) bis l) entspricht weitgehend dem aus Fig. 20 a) bis l) und Fig. 21. Im nachfolgenden wird deshalb vor allem auf die Unterschiede eingegangen.

In Fig. 22 c) wird der Steuerausgang 5 durch Schließen der Teilverbindungselemente SX-H wegen der in positiver Richtung an die Reihenschaltung der Wicklungen L1 und L2 gelegten Versorgungsspannung $U_{ZK}$ auf $U_{BASE,RES} = U_{ZK} \cdot ü / (1+ü)$ geschaltet.

Wie anhand eines Vergleichs der Stromverläufe $I_{S1-H}$ und $I_{S1-L}$ in Fig. 21 und Fig. 23 klar wird, teilt sich der Umschwingstrom $I_{res}$ bei der Kommutierungsschaltung 1 nach Fig. 9 gemäß Fig. 22 c) bis f) bzw. 22 h) bis j) und den entsprechenden Zeitabschnitten nach Fig. 23 auf die beiden Wicklungen L1, L2 und somit die Teilverbindungselemente S1-H und S2-H in Fig. 9 auf. Bei der Kommutierungsschaltung 1 nach Fig. 6 gemäß Fig. 20 c) bis f) bzw. h) bis j) und den entsprechenden Zeitabschnitten nach Fig. 21 hingegen wird der gesamte Umschwingstrom $I_{res}$ über die Wicklung L1 und somit das Teilverbindungselement S1-H geleitet.

Analog wird der Steuerausgang 5 in Fig. 22 i) durch Schließen der Teilverbindungselemente SX-L wegen der gegenüber Fig. 22 c) in umgekehrter Polung an die Reihenschaltung der Wicklungen L1 und L2 gelegten Versorgungsspannung $U_{ZK}$ auf $U_{BASE,RES} = U_{ZK} \cdot 1 / (1+ü)$ geschaltet.

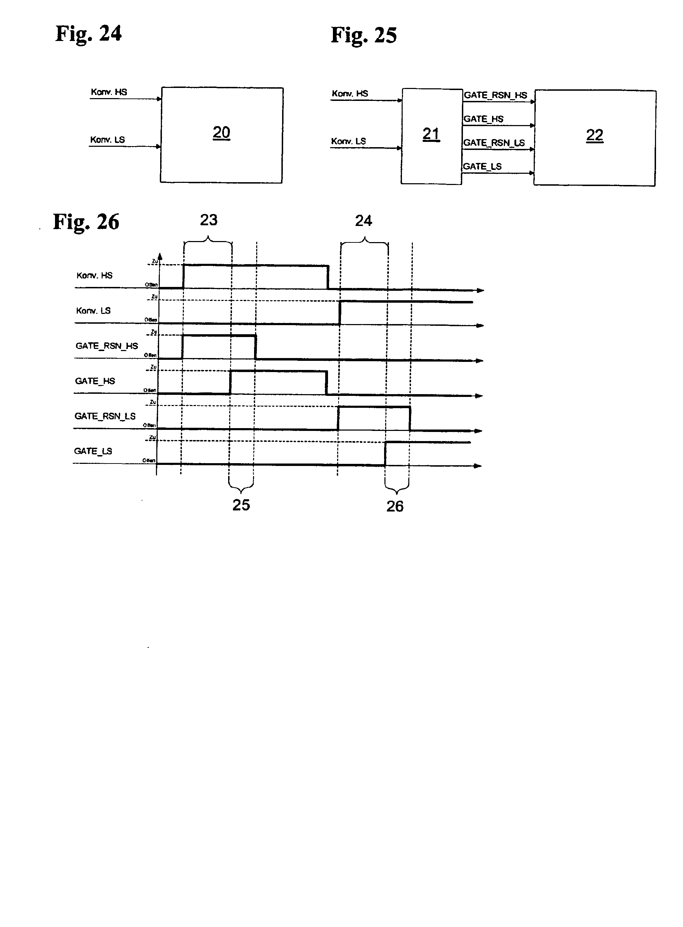

Anhand von Fig. 24 bis 26 wird der Unterschied der zeitlichen Abfolge der Ansteuersignale einer herkömmlich angesteuerten Halbbrücke 20 (Fig. 24) mit einer durch eine festverdrahtete Ansteuerung 21 erfindungsgemäß angesteuerten Halbbrücke 22 (Fig. 25) erläutert.

Hierbei bezeichnen GATE_RSN_HS bzw. GATE_RSN_LS die Ansteuersignale für die Teilverbindungselemente SX-H bzw. SX-L der erfindungsgemäß angesteuerten Halbbrücke 22 entsprechend Fig. 6 bzw. 9 für einen Aufschwing- bzw. Abschwingvorgang, während GATE_ HS bzw. GATE_ LS die Ansteuersignale für die Hauptschalter T1 bzw. T2 für einen Aufschwing- bzw. Abschwingvorgang bezeichnen.

Bei der erfindungsgemäßen Ansteuerung wird in Zeitfenstern 23 bzw. 24, während die Teilverbindungselemente SX-H bzw. SX-L eingeschaltet sind, der Laststrom übernommen und der Umschwingvorgang durchgeführt (siehe auch Fig. 20 bzw. 22). Anschließend kann der jeweilige Hauptschalter T1 bzw. T2 eingeschaltet werden, wobei in Zeitfenstern 25 bzw. 26 der Laststrom durch den LC-Umschwingkreis abgebaut werden kann. Da die Zeitfenster für das spannungslose Einschalten der Hauptschalter T1 bzw. T2 relativ groß sind, können die zeitlichen Abfolgen der Ansteuersignale fest vorgegeben werden.

Sowohl die Ansteuersignale GATE_RSN_HS bzw. GATE_RSN_LS als auch die Ansteuersignale GATE_HS bzw. GATE_LS für die Hauptschalter T1 bzw. T2 können durch eine feste zeitliche Abfolge aus den üblichen Ansteuersignalen "Konv. HS" bzw. "Konv. LS" für eine herkömmliche Halbbrücke 20 abgeleitet werden. Hierdurch kann die zeitliche Abfolge lastunabhängig erfolgen und aufgrund der bekannten Zeitfenster für das spannungslose Einschalten der Hauptschalter T1 bzw. T2 die Ansteuerung 21 "fest verdrahtet", also beispielsweise in einer festprogrammierten Steuerung gebaut werden. Dadurch lassen sich bestehende Halbbrückenschaltungen einfach nachrüsten, da insbesondere keine zusätzlichen Sensoren eingebaut oder Änderungen an der Ansteuersoftware vorgenommen werden müssen. Zudem reduzieren sich dadurch der Aufwand und die Kosten für derartige Ansteuerungen.

**Patentansprüche**

1. Kommutierungsverfahren zum resonanten Umschwingen einer an einem Spannungsausgang (2) eines Energiewandlers bereitgestellten Ausgangsspannung ($U_{Out}$) von einem Startpotential ($U_{ZK}$; *GND)* zu einem Zielpotential (*GND; $U_{ZK}$*), wobei der Energiewandler die Ausgangsspannung ($U_{Out}$) mit einem ersten steuerbaren elektronischen Hauptschalter (T1) mit antiparalleler erster Freilaufdiode (F1) an eine an einem Versorgungsspannungsanschluss (3) anliegende Versorgungsspannung ($U_{ZK}$) und mit einem zweiten steuerbaren elektronischen Hauptschalter (T2) mit antiparalleler zweiter Freilaufdiode (F2) an ein an einem Bezugspotentialanschluss (4) anliegendes Bezugspotential (*GND*) legen kann, und wobei vom Spannungsausgang (2) eine erste Umschwingkapazität (C1) zum Versorgungsspannungsanschluss (3) und/oder eine zweite Umschwingkapazität (C2) zum Bezugspotentialanschluss (4) und eine Umschwinginduktivität ($L_{res}$) zu einem Steuereingang (5') gehen, wobei während des Umschwingens die Hauptschalter (T1, T2) geöffnet sind und an den Steuereingang (5') eine Steuerspannung ($U_{BASE,RES}$) angelegt wird, die um einen Spannungsbetrag ($U_{Boost}$) größer 0 V näher am Zielpotential (*GND; $U_{ZK}$*) als am Startpotential ($U_{ZK}$; *GND*) liegt, **dadurch gekennzeichnet, dass** die Steuerspannung ($U_{BASE,RES}$) durch mindestens einen Transformator mit mindestens zwei Wicklungen (L1, L2; L1-H, L1-L, L2-H, L2-L) eingestellt wird, wobei die mindestens eine erste Wicklung (L1; L1-H, L1-L) einerseits mit dem Steuereingang (5') verbunden ist.

2. Kommutierungsverfahren nach Anspruch 1, **dadurch gekennzeichnet, dass** die Ausgangsspannung ($U_{Out}$) auf den Wert des Zielpotentials ($U_{ZK}$; *GND*) begrenzt wird, sobald die Ausgangsspannung ($U_{Out}$) beim Umschwingen das Zielpotential ($U_{ZK}$; *GND*) überschreitet.

3. Kommutierungsverfahren nach Anspruch 2, **dadurch gekennzeichnet, dass** der zum Anlegen des Zielpotentials ($U_{ZK}$; *GND*) vorgesehene Hauptschalter (T1; T2) eingeschaltet wird, solange die Ausgangsspannung ($U_{Out}$) auf den Wert des Zielpotentials ($U_{ZK}$; *GND*) begrenzt wird.

4. Kommutierungsverfahren nach einem der Ansprüche 1 bis 3, **dadurch gekennzeichnet, dass** vom Wicklungssinn unterschiedliche Anschlüsse (13, 14) der ersten Wicklung (L1; L1-H) und der zweiten Wicklung (L2; L2-H) mit dem Steuereingang (5') verbunden sind, wobei zum Einstellen der Steuerspannung ($U_{BASE,RES}$) der nicht mit dem Steuereingang (5') verbundene andere Anschluss (15) der ersten Wicklung (L1; L1-H) an das Zielpotential ($U_{ZK}$; *GND*) und der nicht mit dem Steuereingang (5') verbundene andere Anschluss (16) der zweiten Wicklung (L2; L2-H) an das Startpotential (*GND; $U_{ZK}$*) gelegt werden, wobei ein Wicklungsverhältnis 1:ü zwischen erster Wicklung (L1; L1-H) und zweiter Wicklung (L2; L2-H) größer 0 und kleiner 1 ist.

5. Kommutierungsverfahren nach Anspruch 4, **dadurch gekennzeichnet, dass** zusätzlich vom Wicklungssinn unterschiedliche Anschlüsse (13, 14) einer ersten Wicklung (L1-L) und einer zweiten Wicklung (L2-L) eines zweiten Transformators mit dem Steuereingang (5') verbunden sind und ein Wicklungsverhältnis 1:ü zwischen erster Wicklung (L1-L) und zweiter Wicklung (L2-L) des zweiten Transformators größer 0 und kleiner 1 ist, wobei

   a) zum Einstellen der Steuerspannung ($U_{BASE,RES}$) für einen Aufschwingvorgang der nicht mit dem Steuereingang (5') verbundene andere Anschluss der ersten Wicklung (L1-H) des ersten Transformators an das höhere Zielpotential ($U_{ZK}$) und der nicht mit dem Steuereingang (5') verbundene andere Anschluss der zweiten Wicklung (L2-H) des ersten Transformators an das niedrigere Startpotential (*GND*) gelegt werden, und
   b) zum Einstellen der Steuerspannung ($U_{BASE,RES}$) für einen Abschwingvorgang der nicht mit dem Steuereingang (5') verbundene andere Anschluss der ersten Wicklung (L1-L) des zweiten Transformators an das niedrigere Zielpotential (*GND*) und der nicht mit dem Steuereingang (5') verbundene andere Anschluss der zweiten Wicklung (L2-L) des zweiten Transformators an das höhere Startpotential ($U_{ZK}$) gelegt werden.

6. Kommutierungsverfahren nach einem der Ansprüche 1 bis 3, **dadurch gekennzeichnet, dass**

   a) zum Einstellen der Steuerspannung ($U_{BASE,RES}$) einander vom Wicklungssinn entsprechende Anschlüsse (9, 10) der ersten und zweiten Wicklung (L1, L2; L1-H, L2-H) mit dem Zielpotential ($U_{ZK}$; *GND*) und der andere Anschluss (11) der zweiten Wicklung (L2; L2-H) mit dem Startpotential (*GND; $U_{ZK}$*) verbunden werden, und der andere Anschluss der ersten Wicklung (L1; L1-H) mit dem Steuereingang (5') verbunden ist, wobei ein Wicklungsverhältnis 1:ü zwischen erster Wicklung (L1; L1-H) und zweiter Wicklung (L2; L2-H) größer 0 und kleiner 0,5 ist, um an der ersten Wicklung (L1; L1-H) eine Spannung zu induzieren, deren Betrag um den Spannungsbetrag ($U_{Boost}$) kleiner als die Hälfte der Spannungsdifferenz zwischen Versorgungsspannung ($U_{ZK}$) und Basispotential (*GND*) ist, oder dass
   b) zum Einstellen der Steuerspannung ($U_{BASE,RES}$) einander vom Wicklungssinn entsprechende Anschlüsse (9', 11) der ersten und zweiten Wicklung (L1, L2; L1-H, L2-H) mit dem Startpotential ($U_{ZK}$; *GND*) und der andere Anschluss (10) der zweiten Wicklung (L2; L2-H) mit dem Zielpotential (*GND; $U_{ZK}$*) verbunden werden, und der andere Anschluss der ersten Wicklung (L1; L1-H) mit dem Steuereingang (5') verbunden ist, wobei ein Wicklungsverhältnis 1:ü zwischen erster Wicklung (L1; L1-H) und zweiter Wicklung (L2; L2-H) größer 0,5 und kleiner 1 ist, um an der ersten Wicklung (L1) eine Spannung zu induzieren, deren Betrag um den Spannungsbetrag ($U_{Boost}$) größer als die Hälfte der Spannungsdifferenz zwischen Versorgungsspannung ($U_{ZK}$) und Basispotential (*GND*) ist.

7. Kommutierungsverfahren nach Anspruch 6, **dadurch gekennzeichnet, dass** zusätzlich ein zweiter Transformator mit einer ersten und zweiten Wicklung (L1-L, L2-L) und einem Wicklungsverhältnis 1:*ü* zwischen erster Wicklung (L1-L) und zweiter Wicklung (L2-L) im gleichen Bereich wie das Wicklungsverhältnis 1:*ü* des ersten Transformators vorgesehen ist, wobei die erste Wicklung (L1-L) des zweiten Transformators mit einem Anschluss, der dem Wicklungssinn des mit dem Steuereingang (5') verbundenen Anschlusses der ersten Wicklung (L1-H) des ersten Transformators entspricht, mit dem Steuereingang (5') verbunden ist, wobei

a) zum Einstellen der Steuerspannung ($U_{BASE,RES}$) für einen Aufschwingvorgang der nicht mit dem Steuereingang verbundene Anschluss der ersten Wicklung (L1-H) und der vom Wicklungssinn entsprechende Anschluss der zweiten Wicklung (L2-H) des ersten Transformators

a1) im Fall der ersten Alternative a) des Anspruchs 6 mit dem höheren Zielpotential ($U_{ZK}$) und der andere Anschluss der zweiten Wicklung (L2-H) des ersten Transformators mit dem niedrigeren Startpotential (*GND*) verbunden werden,
a2) im Fall der zweiten Alternative b) des Anspruchs 6 mit dem niedrigeren Startpotential (*GND*) und der andere Anschluss der zweiten Wicklung (L2-H) des ersten Transformators mit dem höheren Zielpotential ($U_{ZK}$) verbunden werden,

b) und zum Einstellen der Steuerspannung ($U_{BASE,RES}$) for einen Abschwingvorgang der nicht mit dem Steuereingang verbundene Anschluss der ersten Wicklung (L1-L) und der vom Wicklungssinn entsprechende Anschluss der zweiten Wicklung (L2-L) des zweiten Transformators

b1) im Fall der ersten Alternative a) des Anspruchs 6 mit dem niedrigeren Zielpotential (*GND*) und der andere Anschluss der zweiten Wicklung (L2-L) des zweiten Transformators mit dem höheren Startpotential ($U_{ZK}$) verbunden werden
b2) im Fall der zweiten Alternative b) des Anspruchs 6 mit dem höheren Startpotential ($U_{ZK}$) und der andere Anschluss der zweiten Wicklung (L2-L) des zweiten Transformators mit dem niedrigeren Zielpotential (*GND*) verbunden werden.

8. Kommutierungsschaltung (1) zur Bereitstellung einer Steuerspannung ($U_{BASE,RES}$) für einen elektrischen Energiewandler, bei dem zwischen einem Versorgungsspannungsanschluss (3) und einem Spannungsausgang (2) ein erster steuerbarer elektronischer Hauptschalter (T1) mit antiparalleler erster Freilaufdiode und zwischen dem Spannungsausgang (2) und einem Bezugspotentialanschluss (4) ein zweiter steuerbarer elektronischer Hauptschalter (T2) mit antiparalleler zweiter Freilaufdiode (F2) verbunden ist, und bei dem zwischen Versorgungsspannungsanschluss (3) und Spannungsausgang (2) eine erste Umschwingkapazität (C1) und/oder zwischen Spannungsausgang (2) und Bezugspotentialanschluss (4) eine zweite Umschwingkapazität (C2) verbunden ist, **dadurch gekennzeichnet, dass** die Kommutierungsschaltung (1) einen Versorgungsanschluss (6), einen Potentialanschluss (7), einen Steuerausgang (5) und mindestens einem ersten Transformator mit mindestens einer ersten Wicklung (L1; L1-H, L1-L) und mindestens einer zweiten Wicklung (L2; L2-H, L2-L) aufweist, wobei die erste Wicklung (L1; L1-H, L1-L) mit einem Anschluss (13) mit dem Steuerausgang (5) verbunden und mit ihrem anderen Anschluss (9; 15) über ein erstes Verbindungselement (S1) mit dem Versorgungsanschluss (6) oder dem Potentialanschluss (7) verbindbar ist, wobei das Wicklungsverhältnis 1:*ü* von erster Wicklung (L1; L1-H, L1-L) zu zweiter Wicklung (L2; L2-H, L2-L) so eingestellt ist, dass zumindest während eines Umschwingvorgangs der Ausgangsspannung ($U_{Out}$) des Energiewandlers von einem Startpotential ($U_{ZK}$; *GND*) zu einem Zielpotential (*GND*; $U_{ZK}$) eine zwischen Steuerausgang (5) und Potentialanschluss (7) bereitgestellte Steüerspannung ($U_{BASE,RES}$) um einen Spannungsbetrag ($U Boost$) größer 0 V näher am Zielpotential (*GND*; $U_{ZK}$) als am Startpotential ($U_{ZK}$; *GND*) liegt.

9. Kommutierungsschaltung nach Anspruch 8, **dadurch gekennzeichnet, dass** die zweite Wicklung (L2; L2-H, L2-L) einerseits (10) über ein zweites Verbindungselement (S2) mit dem Versorgungsanschluss (6) und andererseits (11) über ein drittes Verbindungselement (S3) mit dem Potentialanschluss (7) verbindbar ist und umgekehrt.

10. Kommutierungsschaltung nach Anspruch 9, **dadurch gekennzeichnet, dass** der Wicklungsfaktor *ü* = 2/(1 − 2*k*) mit 0 < *k* < 0,5 beträgt, um an der ersten Wicklung (L1; L1-H, L1-L) eine Sparnung zu induzieren, deren Betrag um den Spannungsbetrag ($U_{Boost}$) kleiner als die Hälfte der Spannungsdifferenz zwischen Zielpotential ($U_{ZK}$) und Basispotential (*GND*) ist, oder dass der Wicklungsfaktor *ü* = 2/(1 + 2*k*) mit 0 < *k* < 0,5 beträgt, um an der ersten Wicklung (L1; L1-H) eine Spannung zu induzieren, deren Betrag um den Spannungsbetrag ($U_{Boost}$) größer als die Hälfte der Spannungsdifferenz zwischen Zielpotential ($U_{ZK}$) und Basispotential (GND) ist.

11. Kommutierungsschaltung nach Anspruch 10, **dadurch gekennzeichnet, dass** die zweite Wicklung (L2) einerseits (10) über das zweite Verbindungselement (S2) anstatt mit dem Versorgungsanschluss (6) mit einem ersten Hilfsanschluss (6') einer Hilfsspannungsquelle (8) und andererseits (11) über das drittes Verbindungselement (S3) anstatt mit dem Potentialanschluss (7) mit einem zweiten Hilfsanschluss (7') einer Hilfsspannungsquelle (8) verbindbar ist und umgekehrt, wobei der Wicklungsfaktor *ü* nach Anspruch 10 mit dem Verhältnis von Hilfsspannung ($U_{AUX}$) der Hilfsspannungsquelle (8) zu Spannungsdifferenzbetrag zwischen Startpotential ($U_{ZK}$; GND) und Zielpotential (GND; $U_{ZK}$) anzupassen ist.

12. Kommutierungsschaltung nach Anspruch 8, **dadurch gekennzeichnet, dass** die zweite Wicklung (L2) einerseits (14) mit dem Steuerausgang (5) verbunden ist und andererseits (16) über ein zweites Verbindungselement (S2) mit dem Versorgungsanschluss (6) und die erste Wicklung (L1) über das erste Verbindungselement (S1) mit dem Potentialanschluss (7) verbindbar ist und umgekehrt, wobei der Wicklungsfaktor *ü = (1 +1k)/(1-2k)* mit 0 < *k* < 0,5 beträgt.

13. Kommutierungsschaltung nach einem der Ansprüche 9 bis 12, **dadurch gekennzeichnet, dass**

    a) mindestens eines der Verbindungselemente (S1, S2, S3) als Schalt-Halbbrücke aus steuerbaren Halbleiterbauelementen (17) gleicher Durchlassrichtung mit antiparallelen Freilaufdioden und die anderen Verbindungselemente (S1, S2, S3) als Dioden-Halbbrücken mit gleicher Durchlassrichtung und/oder als Schalt-Halbbrücke gebildet sind, wobei die Wicklungen (L1, L2) jeweils am Verbindungspunkt der Bauelemente der jeweiligen Halbbrücke angeschlossen sind, oder dass
    b) mindestens eine der Wicklungen (L1; L2) aus einer ersten Teilwicklung (L1-H; L2-H) und einer zweiten Teilwicklung (L1-L; L2-L) und dass die an diese mindestens eine Wicklung (L1; L2) angeschlossenen Verbindungselemente (S1; S2, S3) aus zwei Teilverbindungselementen (S1-H, S1-L; S2-H, S2-L; S3-H, S3-L) gebildet sind, wobei die erste Teilwicklung (L1-H; L2-H) jeweils mit dem oder den ersten Teilverbindungselementen (S1-H; S2-H, S3-H) und die zweite Teilwicklung (L1-L; L2-L) jeweils mit dem oder den zweiten Teilverbindungselementen (S1-L; S2-L, S3-L) verbunden sind, wobei insbesondere mindestens zwei der Teilverbindungselemente (S3-H, S2-L) aus steuerbaren Halbleiterbauelementen (17) gleicher Durchlassrichtung mit antiparallelen Freilaufdioden und die anderen Teilverbindungselemente (S1-H, S1-L; S2-H, S3-L) als Dioden (18) mit gleicher Durchlassrichtung und/oder als feste Verbindungen (19) gebildet sind.

14. Kommutierungsschaltung nach Anspruch 13, **dadurch gekennzeichnet, dass** bei der zweiten Alternative b) von Anspruch 13 beide Wicklungen (L1; L2) jeweils aus einer ersten Teilwicklung (L1-H; L2-H) und einer zweiten Teilwicklung (L1-L; L2-L) gebildet sind, wobei die beiden ersten Teilwicklungen (L1-H; L2-H) einen ersten Transformator bilden und die beiden zweiten Teilwicklungen (L1-L; L2-L) einen zweiten Transformator bilden.

15. Elektrischer Energiewandler, bei dem zwischen einem Versorgungsspannungsanschluss (3) und einem Spannungsausgang (2) ein erster steuerbarer elektronischer Hauptschalter (T1) mit antiparalleler erster Freilaufdiode und zwischen dem Spannungsausgang (2) und einem Bezugspotentialanschluss (4) ein zweiter steuerbarer elektronischer Hauptschalter (T2) mit antiparalleler zweiter Freilaufdiode (F2) verbunden ist, und bei dem zwischen Versorgungsspannungsanschluss (3) und Spannungsausgang (2) eine erste Umschwingkapazität (C1) und/oder zwischen Spannungsausgang (2) und Bezugspotentialanschluss (4) eine zweite Umschwingkapazität (C2) verbunden ist, und der Spannungsausgang (2) mit einem Steuereingang (5') verbunden ist, **dadurch gekennzeichnet, dass** eine Kommutierungsschaltung (1) nach einem der Ansprüche 8 bis 14 vorgesehen ist, deren Versorgungsanschluss (6) mit dem Versorgungsspannungsanschluss (3), deren Potentialanschluss (7) mit dem Bezugspotentialanschluss (4) und deren Steuerausgang (5) mit dem Steuereingang (5') verbunden ist.

**Claims**

1. Commutation method for resonant oscillation of an output voltage ($U_{Out}$) provided at a voltage output (2) of an energy converter from a starting potential ($U_{ZK}$; GND) to a target potential (GND; $U_{ZK}$), wherein the energy converter can connect the output voltage ($U_{Out}$) with a first controllable electronic main switch (T1) with an antiparallel first freewheeling diode (F1) to a supply voltage ($U_{ZK}$) connected to a supply voltage connection (3) and with a second controllable electronic main switch (T2) with an antiparallel second freewheeling diode (F2) to a reference potential (GND) connected to a reference potential connection (4), and wherein from the voltage output (2) a first oscillating capacitor (C1) goes to the supply voltage connection (3) and/or a second oscillating capacitor (C2) goes to the reference potential connection (4) and an oscillating inductance ($L_{res}$) goes to a control input (5'), wherein while oscillating the main switches (T1, T2) are opened and a control voltage ($U_{BASE,RES}$) is connected to the control input (5'), which control voltage lies closer to the target potential ($GND$; $U_{ZK}$) than to the starting potential ($U_{ZK}$; $GND$) by a voltage amount ($U_{Boost}$) greater than 0 V, **characterised in that** the control voltage ($U_{BASE,RES}$) is set by at least one transformer with at least two windings (L1, L2; L1-H, L1-L, L2-H, L2-L), wherein the at least one first winding (L1; L1-H, L1-L) is connected on one side with the control input (5').

2. Commutation method according to claim 1, **characterised in that** the output voltage ($U_{Out}$) is limited to the value of the target potential ($U_{ZK}$; $GND$) as soon as the output voltage ($U_{Out}$) while oscillating exceeds the target potential ($U_{ZK}$; $GND$).

3. Commutation method according to claim 2, **characterised in that** the main switch (T1; T2) provided for connecting the target potential ($U_{ZK}$; $GND$) is switched on as long as the output voltage ($U_{Out}$) is limited to the value of the target potential ($U_{ZK}$; $GND$).

4. Commutation method according to one of claims 1 to 3, **characterised in that** connections (13, 14) of the first winding (L1; L1-H) and the second winding (L2; L2-H) other than in the winding direction are connected with the control input (5'), wherein to set the control voltage ($U_{BASE,RES}$) the other connection (15) of the first winding (L1; L1-H) not connected with the control input (5') is connected to the target potential ($U_{ZK}$; $GND$) and the other connection (16) of the second winding (L2; L2-H) not connected with the control input (5') is connected to the starting potential ($GND$; $U_{ZK}$), wherein a winding ratio 1:ü between the first winding (LI; L1-H) and the second winding (L2; L2-H) is greater than 0 and smaller than 1.

5. Commutation method according to claim 4, **characterised in that** in addition connections (13, 14) of a first winding (L1-L) and a second winding (L2-L) of a second transformer other than in the winding direction are connected with the control input (5') and a winding ratio 1:**ü** between the first winding (LI-L) and the second winding (L2-L) of the second transformer is greater than 0 and smaller than 1, wherein

    a) to set the control voltage ($U_{BASE,RES}$) for a rising edge of the oscillation the other connection of the first winding (L1-H) of the first transformer not connected with the control input (5') is connected to the higher target potential ($U_{ZK}$) and the other connection of the second winding (L2-H) of the first transformer not connected with the control input (5') is connected to the lower starting potential ($GND$), and
    b) to set the control voltage ($U_{BASE,RES}$) for a falling edge of the oscillation the other connection of the first winding (L1-L) of the second transformer not connected with the control input (5') is connected to the lower target potential ($GND$) and the other connection of the second winding (L2-L) of the second transformer not connected with the control input (5') is connected to the higher starting potential ($U_{ZK}$).

6. Commutation method according to one of claims 1 to 3, **characterised in that**

    a) to set the control voltage ($U_{BASE,RES}$) connections (9, 10) corresponding to one another from the winding direction of the first and second winding (L1, L2; L1-H, L2-H) are connected with the target potential ($U_{ZK}$; $GND$) and the other connection (11) of the second winding (L2; L2-H) is connected with the starting potential ($GND$; $U_{ZK}$), and the other connection of the first winding (L1; L1-H) is connected with the control input (5'), wherein a winding ratio I:ü between the first winding (L1; L1-H) and the second winding (L2; L2-H) is greater than 0 and smaller than 0.5, in order to induce a voltage at the first winding (L1; L1-H) the amount of which is smaller than half the voltage difference between the supply voltage ($U_{ZK}$) and the base potential *(GND)* by the voltage amount ($U_{Boost}$), or **in that**
    b) to set the control voltage ($U_{BASE,RES}$) connections (9', 11) corresponding to one another from the winding direction of the first and second winding (L1, L2; L1-H, L2-H) are connected with the starting potential ($U_{ZK}$; *GND)* and the other connection (10) of the second winding (L2; L2-H) is connected with the target potential (GND; $U_{ZK}$), and the other connection of the first winding (L1; L1-H) is connected with the control input (5'), wherein a winding ratio 1:ü between the first winding (L1; L1-H) and the second winding (L2; L2-H) is greater than 0.5 and smaller than 1, in order to induce a voltage at the first winding (L1) the amount of which is greater than half the voltage difference between the supply voltage ($U_{ZK}$) and the base potential *(GND)* by the voltage amount ($U_{Boost}$).

7. Commutation method according to claim 6, **characterised in that** in addition a second transformer is provided with a first and second winding (L1-L, L2-L) and a winding ratio I:**ü** between the first winding (L1-L) and the second winding (L2-L) in the same range as the winding ratio 1:**ü** of the first transformer, wherein the first winding (L1-L) of the second transformer with a connection which corresponds to the winding direction of the connection of the first winding (L1-H) of the first transformer connected with the control input (5'), is connected with the control input (5'), wherein

a) to set the control voltage ($U_{BASE,RES}$) for a rising edge of the oscillation the connection of the first winding (L1-H) not connected with the control input and the connection of the second winding (L2-H) of the first transformer corresponding from the winding direction

a1) in the case of the first alternative a) of claim 6 are connected with the higher target potential ($U_{ZK}$) and the other connection of the second winding (L2-H) of the first transformer is connected with the lower starting potential (GND),
a2) in the case of the second alternative b) of claim 6 are connected with the lower starting potential (GND) and the other connection of the second winding (L2-H) of the first transformer is connected with the higher target potential ($U_{ZK}$),

b) and to set the control voltage ($U_{BASE,RES}$) for a falling edge of the oscillation the connection of the first winding (L1-L) not connected with the control input and the connection of the second winding (L2-L) of the second transformer corresponding from the winding direction

b1) in the case of the first alternative a) of claim 6 are connected with the lower target potential *(GND)* and the other connection of the second winding (L2-L) of the second transformer is connected with the higher starting potential ($U_{ZK}$),
b2) in the case of the second alternative b) of claim 6 are connected with the higher starting potential ($U_{ZK}$) and the other connection of the second winding (L2-L) of the second transformer is connected with the lower target potential (GND).

8. Commutation circuit (1) for providing a control voltage ($U_{BASE,RES}$) for an electrical energy converter, wherein a first controllable electronic main switch (T1) with an antiparallel first freewheeling diode is connected between a supply voltage connection (3) and a voltage output (2) and a second controllable electronic main switch (T2) with an antiparallel second freewheeling diode (F2) is connected between the voltage output (2) and a reference potential connection (4), and wherein a first oscillating capacitor (C1) is connected between supply voltage connection (3) and voltage output (2) and/or a second oscillating capacitor (C2) is connected between voltage output (2) and reference potential connection (4), **characterised in that** the commutation circuit (1) exhibits a supply connection (6), a potential connection (7), a control output (5) and at least one first transformer with at least one first winding (L1; L1-H, L1-L) and at least one second winding (L2; L2-H, L2-L), wherein the first winding (L1; L1-H, L1-L) can be connected with a connection (13) with the control output (5) and with its other connection (9; 15) through a first connecting element (S1) with the supply connection (6) or the potential connection (7), wherein the winding ratio l:**ü** of the first winding (L1; L1-H, L1-L) to the second winding (L2; L2-H, L2-L) is set so that at least during an oscillation of the output voltage ($U_{Out}$) of the energy converter from a starting potential ($U_{ZK}$; GND) to a target potential (GND; $U_{ZK}$) a control voltage ($U_{BASE,RES}$) provided between control output (5) and potential connection (7) lies closer to the target potential (GND; $U_{ZK}$) than to the starting potential ($U_{ZK}$; GND) by a voltage amount ($U_{Boost}$) greater than 0 V.

9. Commutation circuit according to claim 8, **characterised in that** the second winding (L2; L2-H, L2-L) can be connected on one side (10) through a second connecting element (S2) with the supply connection (6) and on the other side (11) through a third connecting element (S3) with the potential connection (7) and vice versa.

10. Commutation circuit according to claim 9, **characterised in that** the winding factor **ü**=2/(1-2*k*) with 0<*k*<0.5 in order to induce a voltage at the first winding (L1; L1-H, L1-L) the amount of which is smaller than half the voltage difference between target potential ($U_{ZK}$) and base potential (GND) by the voltage amount ($U_{Boost}$), or **in that** the winding factor **ü**=2/(1+2*k*) with 0<*k*<0.5 in order to induce a voltage at the first winding (L1; L1-H) the amount of which is greater than half the voltage difference between target potential ($U_{ZK}$) and base potential (GND) by the voltage amount ($U_{Boost}$).

11. Commutation circuit according to claim 10, **characterised in that** the second winding (L2) can be connected on the one side (10) through the second connecting element (S2) with a first auxiliary connection (6') of an auxiliary voltage source (8) instead of the supply connection (6), and on the other side (11) through the third connecting element (S3) with a second auxiliary connection (7') of an auxiliary voltage source (8) instead of the potential connection (7) and vice versa, wherein the winding factor **ü** according to claim 10 has to be adapted with the ratio of the auxiliary voltage ($U_{AUX}$) of the auxiliary voltage source (8) to the voltage difference amount between starting potential ($U_{ZK}$; $GND$) and target potential ($GND$; $U_{ZK}$).

12. Commutation circuit according to claim 8, **characterised in that** the second winding (L2) is connected on the one side (14) with the control output (5) and on the other side (16) through a second connecting element (S2) with the supply connection (6), and the first winding (L1) can be connected through the first connecting element (S1) with the potential connection (7) and vice versa, wherein the winding factor **ü**= (1+2$k$) / (1-2$k$) with 0<$k$<0.5.

13. Commutation circuit according to one of claims 9 to 12, **characterised in that**

    a) at least one of the connecting elements (S1, S2, S3) is formed as a switching half bridge from controllable semi-conductor components (17) with the same forward direction with antiparallel freewheeling diodes and the other connecting elements (S1, S2, S3) are formed as diode half bridges with the same forward direction and/or as switching half bridges, wherein the windings (L1, L2) are in each case connected to the connecting point of the components of the respective half bridge, or in that
    b) at least one of the windings (L1; L2) is formed from a first part winding (L1-H; L2-H) and a second part winding (L1-L; L2-L) and **in that** the connecting elements (S1; S2, S3) connected to this at least one winding (L1; L2) are formed from two part connecting elements (S1-H, S1-L; S2-H, S2-L; S3-H, S3-L), wherein the first part winding (L1-H; L2-H) is connected in each case with the first part connecting element or elements (S1-H; S2-H, S3-H) and the second part winding (L1-L; L2-L) is connected in each case with the part connecting element or elements (S1-L; S2-L, S3-L), whereby in particular at least two of the part connecting elements (S3-H, S2-L) are formed from controllable semi-conductor components (17) with the same forward direction with antiparallel freewheeling diodes and the other part connecting elements (S1-H, S1-L; S2-H, S3-L) are formed as diodes (18) with the same forward direction and/or as fixed connections (19).

14. Commutation circuit according to claim 13, **characterised in that** in the second alternative b) of claim 13 both windings (L1; L2) are in each case formed from a first part winding (L1-H; L2-H) and a second part winding (L1-L; L2-L), wherein the two first part windings (L1-H; L2-H) form a first transformer and the two second part windings (L1-L; L2-L) form a second transformer.

15. Electrical energy converter wherein a first controllable electronic main switch (T1) with an antiparallel first freewheeling diode is connected between a supply voltage connection (3) and a voltage output (2) and a second controllable electronic main switch (T2) with an antiparallel second freewheeling diode (F2) is connected between the voltage output (2) and a reference potential connection (4), and wherein a first oscillating capacitor (C1) is connected between supply voltage connection (3) and voltage output (2) and/or a second oscillating capacitor (C2) is connected between voltage output (2) and reference potential connection (4), and the voltage output (2) is connected with a control input (5'), **characterised in that** a commutation circuit (1) according to one of claims 8 to 14 is provided, the supply connection (6) of which is connected with the supply voltage connection (3), the potential connection (7) of which is connected with the reference potential (4) and the control output (5) of which is connected with the control input (5').

## Revendications

1. Procédé de commutation servant à modifier l'oscillation par résonance d'une tension de sortie ($U_{out}$) fournie au niveau d'une sortie de tension (2) d'un convertisseur d'énergie pour basculer d'un potentiel de départ ($U_{ZK}$ ; GND) vers un potentiel cible (GND ; $U_{ZK}$), sachant que le convertisseur d'énergie peut appliquer la tension de sortie ($U_{Out}$), à l'aide d'un premier commutateur principal (T1) électronique pouvant être commandé et pourvu d'une première diode de roue libre (F1) antiparallèle, au niveau d'une tension d'alimentation ($U_{ZK}$) située au niveau d'un raccordement de tension d'alimentation (3) et, à l'aide d'un deuxième commutateur principal (T2) électronique pouvant être commandé et pourvu d'une deuxième diode de roue libre (F2) antiparallèle, au niveau d'un potentiel de référence (GND) situé au niveau d'un raccordement de potentiel de référence (4), et
sachant que, depuis la sortie de tension (2), une première capacité de modification d'oscillation (C1) mène au raccordement de tension d'alimentation (3) et/ou une deuxième capacité de modification d'oscillation (C2) mène au raccordement de potentiel de référence (4) et une inductivité de modification d'oscillation ($L_{res}$) mène à une entrée de commande (5'), sachant que, lors de la modification de l'oscillation, les commutateurs principaux (T1, T2) sont ouverts et qu'une tension de commande ($U_{BASE, RES}$) est appliquée au niveau de l'entrée de commande (5'), laquelle tension de commande est supérieure à 0 V d'une valeur de tension donnée ($U_{Boost}$) de manière à être plus proche du potentiel cible (GND ; $U_{ZK}$) que du potentiel de départ ($U_{ZK}$ ; GND), **caractérisé en**

**ce que** la tension de commande ($U_{BASE, RES}$) est réglée par au moins un transformateur pourvu d'au moins deux enroulements (L1, L2 ; L1-H, L1-L, L2-H, L2-L), sachant que le premier enroulement (L1 ; L1-H, L1-L) au moins au nombre d'un est relié d'un côté à l'entrée de commande (5').

2. Procédé de commutation selon la revendication 1, **caractérisé en ce que** la tension de sortie ($U_{out}$) est limitée à la valeur du potentiel cible ($U_{ZK}$ ; GND) dès lors que la tension de sortie ($U_{out}$) dépasse le potentiel cible ($U_{ZK}$ ; GND) lors de la commutation par oscillation.

3. Procédé de commutation la revendication 2, **caractérisé en ce que** le commutateur principal (T1 ; T2) prévu aux fins de l'application du potentiel cible ($U_{ZK}$ ; GND) est commuté tant que la tension de sortie ($U_{out}$) est limitée à la valeur du potentiel cible ($U_{ZK}$ ; GND).

4. Procédé de commutation selon l'une quelconque des revendications 1 à 3, **caractérisé en ce que** des raccordements (13, 14) du premier enroulement (L1 ; L1-H) et du deuxième enroulement (L2 ; L2-H) sont reliés à l'entrée de commande (5'), divers le sens d'enroulement, sachant qu'aux fins du réglage de la tension de commande ($U_{BASE.RES}$) l'autre raccordement (15), non relié à l'entrée de commande (5'), du premier enroulement (L1 ; L1-H) est appliqué au niveau du potentiel cible ($U_{ZK}$ ; GND) et que l'autre raccordement (16), non relié à l'entrée de commande (5'), du deuxième enroulement (L2 ; L2-H) est appliqué au niveau du potentiel de départ (GND ; $U_{ZK}$), sachant qu'un rapport d'enroulement 1:ü entre le premier enroulement (L1 ; L1-H) et le deuxième enroulement (L2 ; L2-H) est supérieur à 0 et inférieur à 1.

5. Procédé de commutation selon la revendication 4, **caractérisé en ce qu'**en complément raccordements (13, 14) d'un premier enroulement (L1-L) et d'un deuxième enroulement (L2-L) d'un deuxième transformateur sont reliés à l'entrée de commande (5') divers le sens d'enroulement, et **en ce qu'**un rapport d'enroulement 1:ü entre le premier enroulement (L1-L) et le deuxième enroulement (L2-L) du deuxième transformateur est supérieur à 0 et inférieur à 1, sachant :

   a) qu'aux fins du réglage de la tension de commande ($U_{BASE.RES}$) pour une opération d'augmentation par oscillation, l'autre raccordement, non relié à l'entrée de commande (5'), du premier enroulement (L1-H) du premier transformateur est appliqué au niveau du potentiel cible plus élevé ($U_{ZK}$) et l'autre raccordement, non relié à l'entrée de commande (5'), du deuxième enroulement (L2-H) du premier transformateur est appliqué au niveau du potentiel de départ plus bas (GND), et

   b) qu'aux fins du réglage de la tension de commande ($U_{BASE.RES}$) pour une opération d'abaissement par oscillation, l'autre raccordement, non relié à l'entrée de commande (5'), du premier enroulement (L1-L) du deuxième transformateur est appliqué au niveau du potentiel cible plus bas (GND) et l'autre raccordement, non relié à l'entrée de commande (5'), du deuxième enroulement (L2-L) du deuxième transformateur est appliqué au niveau du potentiel de départ plus élevé ($U_{ZK}$).

6. Procédé de commutation selon l'une quelconque des revendications 1 à 3, **caractérisé en ce que**

   a) aux fins du réglage de la tension de commande ($U_{BASE, RES}$), des raccordements (9, 10), correspondant les uns aux autres de par le sens d'enroulement, du premier et du deuxième enroulement (L1, L2 ; L1-H, L2-H) sont reliés au potentiel cible ($U_{ZK}$ ; GND) et l'autre raccordement (11) du deuxième enroulement (L2 ; L2-H) est relié au potentiel de départ (GND ; $U_{ZK}$), et **en ce que** l'autre raccordement du premier enroulement (L1 ; L1-H) est relié à l'entrée de commande (5'), sachant qu'un rapport d'enroulement 1:ü entre le premier enroulement (L1 ; L1-H) et le deuxième enroulement (L2 ; L2-H) est supérieur à 0 et est inférieur à 0,5 afin d'induire, au niveau du premier enroulement (L1 ; L1-H) une tension, dont la valeur est inférieure de la valeur de tension donnée ($U_{Boost}$) à la moitié de la différence de tension entre la tension d'alimentation ($U_{ZK}$) et le potentiel de base (GND), ou

   b) **en ce qu'**aux fins du réglage de la tension de commande ($U_{BASE, RES}$), des raccordements (9', 11), correspondant les uns aux autres de par le sens d'enroulement, du premier et du deuxième enroulement (L1, L2 ; L1-H, L2-H) sont reliés au potentiel de départ ($U_{ZK}$; GND) et l'autre raccordement (10) du deuxième enroulement (L2 ; L2-H) est relié au potentiel cible (GND ; $U_{ZK}$), et l'autre raccordement du premier enroulement (L1 ; L1-H) est relié à l'entrée de commande (5'), sachant qu'un rapport d'enroulement 1:ü entre le premier enroulement (L1 ; L1-H) et le deuxième enroulement (L2 ; L2-H) est supérieur à 0,5 et inférieur à 1 afin d'induire, au niveau du premier enroulement (L1), une tension dont la valeur est supérieure de la valeur de tension donnée ($U_{Boost}$) à la moitié de la différence de tension entre la tension d'alimentation ($U_{ZK}$) et le potentiel de base (GND).

**7.** Procédé de commutation selon la revendication 6, **caractérisé en ce qu'**est prévu en complément un deuxième transformateur pourvu d'un premier et d'un deuxième enroulement (L1-L, L2-L) et présentant un rapport d'enroulement 1:ü entre le premier enroulement (L1-L) et le deuxième enroulement (L2-L) dans la même plage que le rapport d'enroulement 1:ü du premier transformateur, sachant que le premier enroulement (L1-L) du deuxième transformateur est relié à l'entrée de commande (5') avec un raccordement qui correspond au sens d'enroulement du raccordement, relié à l'entrée de commande (5'), du premier enroulement (L1-H) du premier transformateur, sachant

a) qu'aux fins du réglage de la tension de commande ($U_{BASE, RES}$) pour une opération d'augmentation par oscillation, le raccordement, non relié à l'entrée de commande, du premier enroulement (L1-H) et le raccordement, correspondant de par le sens d'enroulement, du deuxième enroulement (L2-H) du premier transformateur

a1) sont reliés, dans le cas de la première variante a) de la revendication 6, au potentiel cible ($U_{ZK}$) plus élevé et l'autre raccordement du deuxième enroulement (L2-H) du premier transformateur est relié au potentiel de départ (GND) plus bas,
a2) sont reliés, dans le cas de la deuxième variante b) de la revendication 6, au potentiel de départ (GND) plus bas, et l'autre raccordement du deuxième enroulement (L2-H) du premier transformateur est relié au potentiel cible ($U_{ZK}$) plus élevé,

b) qu'aux fins du réglage de la tension de commande ($U_{BASE, RES}$) pour une opération d'abaissement par oscillation, le raccordement, non relié à l'entrée de commande, du premier enroulement (L1-L) et le raccordement, correspondant de par le sens d'enroulement, du deuxième enroulement (L2-L) du deuxième transformateur,

b1) sont reliés, dans le cas de la première variante a) de la revendication 6, au potentiel cible (GND) plus bas, et l'autre raccordement du deuxième enroulement (L2-L) du deuxième transformateur est relié au potentiel de départ ($U_{ZK}$) plus élevé,
b2) sont reliés, dans le cas de la deuxième variante b) de la revendication 6, au potentiel de départ ($U_{ZK}$) plus élevé et l'autre raccordement du deuxième enroulement (L2-L) du deuxième transformateur est relié au potentiel cible (GND) plus bas.

**8.** Circuit de commutation (1) servant à fournir une tension de commande ($U_{BASE, RES}$) pour un convertisseur d'énergie électrique, pour lequel un premier commutateur principal (T1) électronique pouvant être commandé est relié à une première diode de roue libre antiparallèle entre un raccordement de tension d'alimentation (3) et une sortie de tension (2) et où un deuxième commutateur principal (T2) électronique pouvant être commandé est relié à une deuxième diode de roue libre (F2) antiparallèle entre la sortie de tension (2) et un raccordement de potentiel de référence (4) et pour lequel une première capacité de modification d'oscillation (C1) est reliée entre le raccordement de tension d'alimentation (3) et la sortie de tension (2) et/ou une deuxième capacité de modification d'oscillation (C2) est reliée entre la sortie de tension (2) et le raccordement de potentiel de référence (4), **caractérisé en ce que** le circuit de commutation (1) présente un raccordement d'alimentation (6), un raccordement de potentiel (7), une sortie de commande (5) et au moins un premier transformateur pourvu d'au moins un premier enroulement (L1 ; L1-H, L1-L) et d'au moins un deuxième enroulement (L2 ; L2-H, L2-L), sachant que le premier enroulement (L1 ; L1-H, L1-L) est relié par un raccordement (13) à l'entrée de commande (5) et peut être relié par son autre raccordement (9 ; 15), par l'intermédiaire d'un premier élément de liaison (S1), au raccordement d'alimentation (6) ou au raccordement de potentiel (7), sachant que le rapport d'enroulement 1:ü entre le premier enroulement (L1 ; L1-H, L1-L) et le deuxième enroulement (L2 ; L2-H, L2-L) est réglé de telle manière qu'au moins au cours d'une opération de modification d'oscillation de la tension de sortie ($U_{Out}$) du convertisseur d'énergie depuis un potentiel de départ ($U_{ZK}$ ; GND) vers un potentiel cible (GND ; $U_{ZK}$), une tension de commande ($U_{BASE, RES}$) fournie entre la sortie de commande (5) et le raccordement de potentiel (7) est supérieure d'une valeur de tension donnée ($U_{Boos}$t) à 0 V de manière à être plus proche du potentiel cible (GND ; $U_{ZK}$) que du potentiel de départ ($U_{ZK}$ ; GND).

**9.** Circuit de commutation selon la revendication 8, **caractérisé en ce que** le deuxième enroulement (L2 ; L2-H, L2-L) peut être relié d'un côté (10), par l'intermédiaire d'un deuxième élément de liaison (S2), au raccordement d'alimentation (6) et, de l'autre côté (11), par l'intermédiaire d'un troisième élément de liaison (S3), au raccordement de potentiel (7), et inversement.

**10.** Circuit de commutation selon la revendication 9, **caractérisé en ce que** le facteur d'enroulement est égal à ü = 2/(1 - 2k) où 0 < k < 0,5 afin d'induire, au niveau du premier enroulement (L1 ; L1-H, L1-L), une tension dont la valeur est inférieure de la valeur de tension donnée ($U_{Boost}$) à la moitié de la différence de tension entre le potentiel cible ($U_{ZK}$) et le potentiel de base (GND), ou **en ce que** le facteur d'enroulement est égal à ü = 2/ (1 + 2k) où 0 < k < 0,5 afin d'induire, au niveau du premier enroulement (L1 ; L1-H), une tension dont la valeur est plus grande de la valeur de tension donnée ($U_{Boost}$) à la moitié de la différence de tension entre le potentiel cible ($U_{ZK}$) et le potentiel de base (GND).

11. Circuit de commutation selon la revendication 10, **caractérisé en ce que** le deuxième enroulement (L2) peut être relié d'un côté (10), par l'intermédiaire du deuxième élément de liaison (S2), en lieu et place du raccordement d'alimentation (6), à un premier raccordement auxiliaire (6') d'une source de tension auxiliaire (8) et, de l'autre côté (11), par l'intermédiaire du troisième élément de liaison (S3), en lieu et place du raccordement de potentiel (7), à un deuxième raccordement auxiliaire (7') d'une source de tension auxiliaire (8), et inversement, sachant que le facteur d'enroulement ü selon la revendication 10 est à adapter avec le rapport entre la tension auxiliaire ($U_{AUX}$) de la source de tension auxiliaire (8) et la valeur de la différence de tension entre le potentiel de départ ($U_{ZK}$ ; GND) et le potentiel cible (GND ; $U_{ZK}$).

12. Circuit de commutation selon la revendication 8, **caractérisé en ce que** le deuxième enroulement (L2) est relié d'un côté (14) à la sortie de commande (5) et peut être relié de l'autre côté (16), par l'intermédiaire d'un deuxième élément de liaison (S2), au raccordement d'alimentation (6), et **en ce que** le premier enroulement (L1) peut être relié, par l'intermédiaire du premier élément de liaison (S1), au raccordement de potentiel (7), et inversement, sachant que le facteur d'enroulement est égal à ü = (1 + 2k) / (1-2k) où 0 < k < 0,5.

13. Circuit de commutation selon l'une quelconque des revendications 9 à 12, **caractérisé en ce que**

a) au moins un des éléments de liaison (S1, S2, S3) est formé sous la forme d'un demi-pont de commutation constitué de composants semi-conducteurs (17) pouvant être commandés, présentant un même sens de passage et pourvus de diodes de roue libre antiparallèles, et **en ce que** les autres éléments de liaison (S1, S2, S3) sont formés sous la forme de demi-ponts à diode présentant le même sens de passage et/ou sous la forme de demi-ponts de commutation, sachant que les enroulements (L1, L2) sont raccordés respectivement au niveau du point de liaison des composants des demi-ponts respectifs,
ou **en ce que**

b) au moins un des enroulements (L1 ; L2) est formé à partir d'un premier enroulement partiel (L1-H ; L2-H) et d'un deuxième enroulement partiel (L1-L ; L2-L), et **en ce que** les éléments de liaison (S1 ; S2, S3) raccordés audit enroulement (L1 ; L2) au moins au nombre d'un sont formés à partir de deux éléments de liaison partielle (S1-H, S1-L ; S2-H, S2-L ; S3-H, S3-L), sachant que le premier enroulement partiel (L1-H ; L2-H) est relié respectivement au premier ou aux premiers éléments de liaison partielle (S1-H ; S2-H, S3-H) et que le deuxième enroulement partiel (L1-L ; L2-L) est relié respectivement au deuxième ou aux deuxièmes éléments de liaison partielle (S1-L ; S2-L, S3-L), sachant en particulier qu'au moins deux des éléments de liaison partielle (S3-H, S2-L) sont formés à partir de composants semi-conducteurs (17) pouvant être commandés, présentant le même sens de passage et pourvus de diodes de roue libre antiparallèles, et que les autres éléments de liaison partielle (S1-H, S1-L ; S2-H, S3-L) sont formés sous forme de diodes (18) présentant le même sens de passage et/ou sous forme de liaisons (19) solides.

14. Circuit de commutation selon la revendication 13, **caractérisé en ce que**, dans le cas de la deuxième variante b) de la revendication 13, les deux enroulements (L1 ; L2) sont formés respectivement à partir d'un premier enroulement partiel (L1-H ; L2-H) et d'un deuxième enroulement partiel (L1-L ; L2-L), sachant que les deux premiers enroulements partiels (L1-H ; L2-H) forment un premier transformateur, et que les deux deuxièmes enroulements partiels (L1-L ; L2-L) forment un deuxième transformateur.

15. Convertisseur d'énergie électrique, pour lequel un premier commutateur principal (T1) électronique pouvant être commandé est relié, entre un raccordement de tension d'alimentation (3) et une sortie de tension (2), à une première diode de roue libre antiparallèle et où un deuxième commutateur principal (T2) électronique pouvant être commandé est relié, entre la sortie de tension (2) et un raccordement de potentiel de référence (4), à une deuxième diode de roue libre antiparallèle (F2), et pour lequel une première capacité de modification d'oscillation (C1) est reliée entre le raccordement de tension d'alimentation (3) et la sortie de tension (2) et/ou où une deuxième capacité de modification d'oscillation (C2) est reliée entre la sortie de tension (2) et le raccordement de potentiel de référence (4), et pour lequel la sortie de tension (2) est reliée à l'entrée de commande (5'), **caractérisé en ce qu'**un circuit de commutation (1) selon l'une quelconque des revendications 8 à 14 est prévu, dont le raccordement d'alimentation (6) est relié au raccordement de tension d'alimentation (3), dont le raccordement de potentiel (7) est relié au raccordement de potentiel de référence (4) et dont la sortie de commande (5) est reliée à l'entrée de commande (5').

**Fig. 1**

**Fig. 2**

**Fig. 3**

## Fig. 4

## Fig. 5

## Fig. 6

## Fig. 7

**Fig. 8**

**Fig. 9**

**Fig. 10**

Fig. 11

Fig. 12

Fig. 13

**Fig. 14**

**Fig. 15**

**Fig. 16**

**Fig. 17**

**Fig. 18**

**Fig. 19**

Fig. 20 a)

| T1 | Offen |
|------|-------|
| T2 | Zu |
| SX-H | Offen |
| SX-L | Offen |

Fig. 20 b)

| T1 | Offen |
|------|-------|
| T2 | **Offen** |
| SX-H | Offen |
| SX-L | Offen |

Fig. 20 c)

| T1 | Offen |
|------|-------|
| T2 | Offen |
| SX-H | **Zu** |
| SX-L | Offen |

Fig. 20 d)

| T1 | Offen |
|------|-------|
| T2 | Offen |
| SX-H | Zu |
| SX-L | Offen |

**Fig. 20 e)**

| T1 | Offen |
|------|-------|
| T2 | Offen |
| SX-H | Zu |
| SX-L | Offen |

**Fig. 20 f)**

| T1 | Zu |
|------|-------|
| T2 | Offen |
| SX-H | Zu |
| SX-L | Offen |

**Fig. 20 g)**

| T1 | Zu |
|------|-------|
| T2 | Offen |
| SX-H | Offen |
| SX-L | Offen |

**Fig. 20 h)**

| T1 | Offen |
|------|-------|
| T2 | Offen |
| SX-H | Offen |
| SX-L | Offen |

**Fig. 20 i)**

| T1 | Offen |
|------|-------|
| T2 | Offen |
| SX-H | Offen |
| SX-L | **Zu** |

**Fig. 20 j)**

| T1 | Offen |
|------|-------|
| T2 | Offen |
| SX-H | Offen |
| SX-L | Zu |

**Fig. 20 k)**

| T1 | Offen |
|------|-------|
| T2 | **Zu** |
| SX-H | Offen |
| SX-L | Zu |

**Fig. 20 l)**

| T1 | Offen |
|------|-------|
| T2 | Zu |
| SX-H | Offen |
| SX-L | **Offen** |

**Fig. 21**

Fig. 20

**Fig. 22 a)**

| T1 | Offen |
|----|-------|
| T2 | Zu |
| SX-H | Offen |
| SX-L | Offen |

**Fig. 22 b)**

| T1 | Offen |
|----|-------|
| T2 | Offen |
| SX-H | Offen |
| SX-L | Offen |

**Fig. 22 c)**

| T1 | Offen |
|----|-------|
| T2 | Offen |
| SX-H | Zu |
| SX-L | Offen |

**Fig. 22 d)**

| T1 | Offen |
|----|-------|
| T2 | Offen |
| SX-H | Zu |
| SX-L | Offen |

**Fig. 22 e)**

| T1 | Offen |
|------|-------|
| T2 | Offen |
| SX-H | Zu |
| SX-L | Offen |

**Fig. 22 f)**

| T1 | Zu |
|------|-------|
| T2 | Offen |
| SX-H | Zu |
| SX-L | Offen |

**Fig. 22 g)**

| T1 | Zu |
|------|-------|
| T2 | Offen |
| SX-H | Offen |
| SX-L | Offen |

**Fig. 22 h)**

| T1 | Offen |
|------|-------|
| T2 | Offen |
| SX-H | Offen |
| SX-L | Offen |

**Fig. 22 i)**

| T1 | Offen |
|------|-------|
| T2 | Offen |
| SX-H | Offen |
| SX-L | **Zu** |

**Fig. 22 j)**

| T1 | Offen |
|------|-------|
| T2 | Offen |
| SX-H | Offen |
| SX-L | Zu |

**Fig. 22 k)**

| T1 | Offen |
|------|-------|
| T2 | **Zu** |
| SX-H | Offen |
| SX-L | Zu |

**Fig. 22 l)**

| T1 | Offen |
|------|-------|
| T2 | Zu |
| SX-H | Offen |
| SX-L | **Offen** |

**Fig. 23**

Fig. 22    a)    b) c) d)    e) f)    g)    h) i) j) k)    l)

**Fig. 24**

**Fig. 25**

Konv. HS →

Konv. LS →

$\underline{20}$

Konv. HS →

Konv. LS →

$\underline{21}$

GATE_RSN_HS →

GATE_HS →

GATE_RSN_LS →

GATE_LS →

$\underline{22}$

**Fig. 26**

23        24

Konv. HS

Konv. LS

GATE_RSN_HS

GATE_HS

GATE_RSN_LS

GATE_LS

25        26

## IN DER BESCHREIBUNG AUFGEFÜHRTE DOKUMENTE

**In der Beschreibung aufgeführte Patentdokumente**

- WO 2009027758 A1
- US 5572418 A
- US 5047913 A
- US 20060109694 A1

**In der Beschreibung aufgeführte Nicht-Patentliteratur**

- Proceedings of the European Conference on Power Electronics and Applications. **ERHARDT L.L.** Electronics Power Supply Systems, Brighton. IEE, 13. September 1993, vol. 3, 46-51